# EUROPEAN PATENT APPLICATION

(11) **EP 4 191 867 A1**
(43) Date of publication of application: **07.06.2023**
(21) Application number: 21849740.2
(22) Date of filing: 16.07.2021
(51) Int. Cl.: H02S 50/10

(54) **MEASUREMENT METHOD FOR SOLAR CELL MODULE**

(30) Priority: 29.07.2020 JP 2020127933
(71) Applicant: Kyocera Corporation, Kyoto-shi Kyoto 612-8501 (JP)
(72) Inventor: MIYAMICHI, Yusuke, Kyoto-shi, Kyoto 612-8501 (JP); KUROSU, Keita, Kyoto-shi, Kyoto 612-8501 (JP); USHIO, Shinnosuke, Kyoto-shi, Kyoto 612-8501 (JP); NISHIMURA, Daisuke, Kyoto-shi, Kyoto 612-8501 (JP); SHIBAHARA, Motoki, Kyoto-shi, Kyoto 612-8501 (JP); TAKAHASHI, Masaya, Kyoto-shi, Kyoto 612-8501 (JP)
(74) Representative: TBK
(86) International application number: PCT/JP2021/026804
(87) International publication number: WO 2022/024816

(57) **Abstract**

A measurement method for a photovoltaic module includes loading (S10) and measuring (S20). The loading (S10) includes loading a photovoltaic module onto a measurement device. The measuring (S20) includes measuring, with an output characteristic measurer included in the measurement device, an output voltage value and an output current value between a positive terminal and a negative terminal of the photovoltaic module, and measuring, with a weight measurer included in the measurement device, a weight value of the photovoltaic module.

## Description

### TECHNICAL FIELD

The present disclosure relates to measurement for a photovoltaic module.

### BACKGROUND OF INVENTION

Photovoltaic module measurement includes measuring the output characteristics of a photovoltaic module (refer to, for example, Japanese Unexamined Patent Application Publication No. 2019-140784).

### SUMMARY

One or more aspects of the disclosure are directed to a measurement method for a photovoltaic module.

In an aspect, a measurement method for a photovoltaic module includes loading and measuring. The loading includes loading a photovoltaic module onto a measurement device. The measuring includes measuring, with an output characteristic measurer included in the measurement device, an output voltage value and an output current value between a positive terminal and a negative terminal of the photovoltaic module, and measuring, with a weight measurer included in the measurement device, a weight value of the photovoltaic module.

### BRIEF DESCRIPTION OF THE DRAWINGS

FIG. 1 is a schematic diagram of a measurement device with an example structure according to a first embodiment.
FIG. 2 is a functional block diagram of a controller included in the measurement device according to the first embodiment.
FIG. 3 is a diagram showing a first example of operation timing of the measurement device according to the first embodiment.
FIG. 4 is a diagram showing a second example of operation timing of the measurement device according to the first embodiment.
FIG. 5 is a diagram showing a third example of operation timing of the measurement device according to the first embodiment.
FIG. 6 is a diagram showing a fourth example of operation timing of the measurement device according to the first embodiment.
FIG. 7 is a diagram showing a fifth example of operation timing of the measurement device according to the first embodiment.
FIG. 8 is a diagram showing a sixth example of operation timing of the measurement device according to the first embodiment.
FIG. 9 is a schematic diagram of a measurement device according to a variation of the first embodiment.
FIG. 10 is a flowchart of a first example of a measurement method for a photovoltaic module performed with the measurement device according to the first embodiment.
FIG. 11 is a flowchart of an example loading process.
FIG. 12 is a flowchart of a second example of a measurement method for a photovoltaic module performed with the measurement device according to the first embodiment.
FIG. 13 is a flowchart of a third example of a measurement method for a photovoltaic module performed with the measurement device according to the first embodiment.
FIG. 14 is a flowchart of a first example of a calculation process.
FIG. 15 is a flowchart of a second example of a calculation process.
FIG. 16 is a schematic diagram of a measurement device with an example structure according to a second embodiment.
FIG. 17 is a schematic diagram of a measurement device with an example structure according to a third embodiment.
FIG. 18 is a schematic diagram of a measurement device with an example structure according to a fourth embodiment.
FIG. 19 is a schematic diagram of a measurement device with a first example structure according to a fifth embodiment.
FIG. 20 is a schematic diagram of a measurement device with a second example structure according to the fifth embodiment.
FIG. 21 is a schematic diagram of a measurement device with a first example structure according to a sixth embodiment.
FIG. 22 is a schematic diagram of a measurement device with a second example structure according to the sixth embodiment.
FIG. 23 is a schematic diagram of a measurement device with a first example structure according to a seventh embodiment.
FIG. 24 is a schematic diagram of a measurement device with a second example structure according to the seventh embodiment.
FIG. 25 is a schematic diagram of a measurement device with a 1A-example structure according to an eighth embodiment.
FIG. 26 is a flowchart of a first example of a calculation process included in a measurement method for a photovoltaic module performed with the measurement device according to the eighth embodiment.
FIG. 27 is a flowchart of a second example of a calculation process included in a measurement method for a photovoltaic module performed with the measurement device according to the eighth embodiment.
FIG. 28 is a diagram of examples of various data items.
FIG. 29 is a flowchart of a first example of a measurement method for a photovoltaic module performed with the measurement device according to the eighth embodiment.
FIG. 30 is a flowchart of a second example of a measurement method for a photovoltaic module performed with the measurement device according to the eighth embodiment.
FIG. 31 is a flowchart of a third example of a measurement method for a photovoltaic module performed with the measurement device according to the eighth embodiment.
FIG. 32 is a flowchart of a first example process performed by a controller included in the measurement device according to the eighth embodiment.
FIG. 33 is a flowchart of a second example process performed by the controller included in the measurement device according to the eighth embodiment.
FIG. 34 is a schematic diagram of a measurement device with a 1B-example structure according to the eighth embodiment.
FIG. 35 is a schematic diagram of a measurement device with a second example structure according to the eighth embodiment.
FIG. 36 is a schematic diagram of a measurement device with a third example structure according to the eighth embodiment.
FIG. 37 is a schematic diagram of a measurement device with a fourth example structure according to the eighth embodiment.
FIG. 38 is a schematic diagram of a measurement device with a fifth example structure according to the eighth embodiment.
FIG. 39 is a schematic diagram of a measurement device with a sixth example structure according to the eighth embodiment.

### DESCRIPTION OF EMBODIMENTS

Photovoltaic module measurement includes measuring the output characteristics of a photovoltaic module.

Photovoltaic modules are to be lightweight and to have improved output characteristics. The output characteristics of such photovoltaic modules are measured using index values defined to achieve weight reduction and improved output characteristics. One such index value may be a maximum output value per unit weight calculated by, for example, dividing the maximum output value of a photovoltaic module (also referred to as a maximum output value or a maximum power value) by the weight value of the photovoltaic module.

However, the output characteristics of a photovoltaic module may be, for example, measured under measurement conditions such as the state of a gas flow around the photovoltaic module that can vary the degree of cooling of the photovoltaic module. This can vary the measurement results. The weight of a photovoltaic module may also be, for example, measured under measurement conditions such as the state of a gas flow around the photovoltaic module that can vary the buoyancy and the pressing force against the photovoltaic module resulting from the air currents. This can also vary the measurement results.

The output characteristics and the weight as measurement results that can vary in response to, for example, the measurement conditions are used to calculate the index value for the output characteristics. The measurement accuracy of such an index value is thus to be improved.

This issue can be noticeable in, for example, a photovoltaic module that is lightweight relative to the area of its light-receiving surface.

The inventors of the present disclosure have thus developed a technique for improving the measurement accuracy of the index value for the output characteristics of a photovoltaic module.

Embodiments of the present disclosure will now be described with reference to the drawings. In the drawings, the same reference numerals denote the components with the same or similar structures and functions, and such components are not described repeatedly. The drawings are schematic.

### 1. First Embodiment

In a first embodiment, a measurement device 1 (also referred to as a measurement device for a photovoltaic module) measures the quantitative characteristics of a photovoltaic module 3.

### 1-1. Photovoltaic Module

The photovoltaic module 3 includes, for example, a first surface 3a and a second surface 3b opposite to the first surface 3a. The photovoltaic module 3 is, for example, a plate. The plate may be, for example, a flat plate, a curved plate, or a flexible plate. The photovoltaic module 3 includes, for example, a first protector, a second protector, multiple photovoltaic cells, and a filler. The first protector serves as, for example, the first surface 3a. The first protector is, for example, a transparent member such as a glass or resin thin plate or a resin film. The second protector serves as, for example, the second surface 3b. The second protector may be, for example, a thin plate or a film. The second protector may or may not be transparent, for example. The first protector and the second protector are substantially parallel to each other across a space. The multiple photovoltaic cells are located in, for example, the space between the first protector and the second protector. Each photovoltaic cell can output electricity through, for example, photoelectric conversion in response to light illumination. The filler covers, for example, the multiple photovoltaic cells between the first protector and the second protector. The material for the filler may be, for example, ethylene-vinyl acetate (EVA), a polyvinyl acetal such as polyvinyl butyral (PVB), an acid-modified resin, or an ionomer.

Each photovoltaic cell includes, for example, a semiconductor substrate or a thin film of a semiconductor, a first electrode, and a second electrode. The semiconductor substrate may be a substrate of, for example, a crystalline semiconductor such as crystalline silicon, an amorphous semiconductor such as amorphous silicon, or a compound semiconductor such as a compound of four elements, copper, indium, gallium, and selenium or a compound of two elements, cadmium and tellurium. Examples of the thin film of a semiconductor include a silicon-based thin film, a semiconductor compound-based thin film, and thin films of other semiconductors. The silicon-based thin film may be, for example, a thin film of amorphous silicon or a thin film of polycrystalline silicon. The semiconductor compound-based thin film may be, for example, a thin film of a semiconductor compound with a chalcopyrite structure such as copper indium selenide (CIS) or copper indium gallium selenide (CIGS), a thin film of a semiconductor compound such as a compound with a perovskite structure, a thin film of a semiconductor compound with a kesterite structure, or a thin film of a semiconductor with cadmium telluride (CdTe). CIS is a semiconductor compound containing copper (Cu), indium (In), and selenium (Se). CIGS is a semiconductor compound containing Cu, In, gallium (Ga), and Se. The thin films of other semiconductors may include a thin film of, for example, an organic material.

The multiple photovoltaic cells are aligned along, for example, the first surface 3a and the second surface 3b. The multiple photovoltaic cells include, for example, two or more groups of photovoltaic cells (also referred to as photovoltaic cell groups). Each photovoltaic cell group includes, for example, two or more photovoltaic cells electrically connected in series. Two or more groups of photovoltaic cells may be, for example, electrically connected in series or electrically connected in parallel. The multiple photovoltaic cells can be electrically interconnected with, for example, conductors such as wires.

The photovoltaic module 3 includes, for example, a first terminal 3p and a second terminal 3n. The first terminal 3p and the second terminal 3n can output, for example, electricity produced by the multiple photovoltaic cells in response to light illumination on the first surface 3 a as a light-receiving surface. The light-receiving surface serves as, for example, a surface that receives external light for causing photoelectric conversion in the photovoltaic cells included in the photovoltaic module 3. When, for example, the first terminal 3p is a positive electrode terminal (also referred to as a positive terminal), the second terminal 3n is a negative electrode terminal (also referred to as a negative terminal). When, for example, the first terminal 3p is a negative terminal, the second terminal 3n is a positive terminal. When, for example, the photovoltaic module 3 includes a terminal box, the terminal box includes the first terminal 3p and the second terminal 3n. The terminal box may be, for example, located on the second surface 3b of the photovoltaic module 3.

### 1-2. Structure of Measurement Device

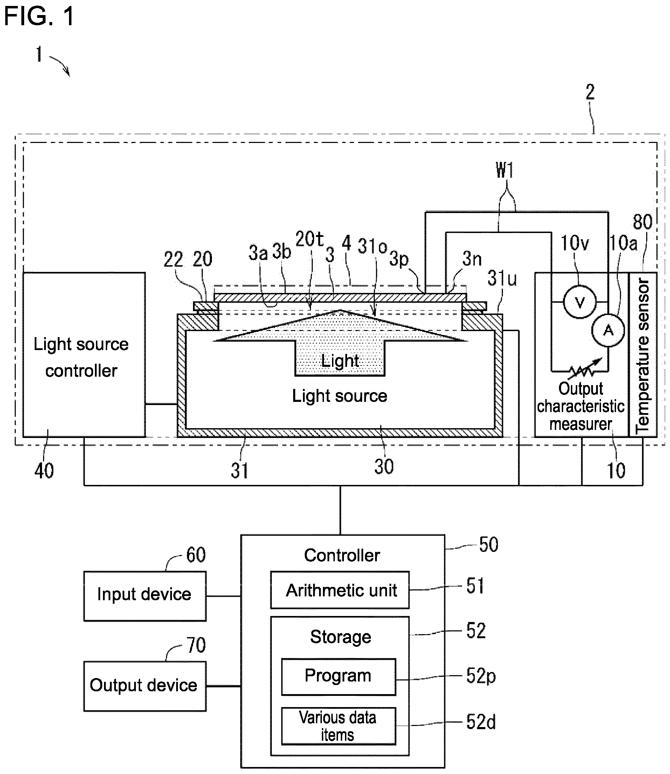

As illustrated in FIG. 1, the measurement device 1 includes, for example, an output characteristic measurer 10, a weight measurer 20, a light source 30, a light source controller 40, a controller 50, an input device 60, and an output device 70.

### 1-2-1. Output Characteristic Measurer

The output characteristic measurer 10 can measure, for example, the voltage value (also referred to as an output voltage value) and the current value (also referred to as an output current value) between the first terminal 3p and the second terminal 3n. The output characteristic measurer 10 includes, for example, wiring (also referred to as first wiring) W1 that can be electrically connected to the first terminal 3p and the second terminal 3n. The first wiring W1 includes, for example, a first wire (also referred to as a 1A-wire) and a second wire (also referred to as a 1B-wire). The first 1A-wire is, for example, electrically connected to the first terminal 3p. The second 1B-wire is, for example, electrically connected to the second terminal 3n. Each of the 1A-wire and the 1B-wire includes, for example, a conductive wire with its outer periphery covered with an insulator such as resin. The first wiring W1 may be connected to the first terminal 3p and the second terminal 3n in, for example, any of the manners including connector connection, pin-terminal connection, button connection, and slide-in connection. The connector connection uses connectors. The pin-terminal connection uses pin terminals. The button connection uses a protruding terminal and a recessed terminal that mate each other. The slide-in connection uses a plug receptacle (also referred to as an outlet) and a plug slid into the plug receptacle.

The output characteristic measurer 10 includes a voltage meter 10v and a current meter 10a. The voltage meter 10v and the current meter 10a are, for example, electrically connected to the first terminal 3p and the second terminal 3n with the first wiring W 1. The voltage meter 10v includes, for example, a voltmeter that can measure the value of the voltage (output voltage value) generated across the first terminal 3p and the second terminal 3n in response to illumination from the light source 30 onto the first surface 3a. The current meter 10a includes, for example, an ammeter that can measure the value of the current (output current value) flowing between the first terminal 3p and the second terminal 3n in response to illumination from the light source 30 onto the first surface 3a. The output characteristic measurer 10 includes, for example, a variable resistor. The variable resistor is, for example, electrically connected to the first terminal 3p and the second terminal 3n to be electrically connected in parallel with the voltage meter 10v and in series with the current meter 10a. 1-2-2. Weight Measurer

The weight measurer 20 can measure, for example, the value of the weight of the photovoltaic module 3 (also referred to as a weight value). The weight measurer 20 includes, for example, any device (also referred to as a weight meter) that can measure the weight value of a measurement target. The weight meter is, for example, a digital weighing scale. The digital weighing scale is, for example, a load cell (electric resistance wire) balance or an electromagnetic balance. For the measurement target being the photovoltaic module 3, for example, the weight value of the photovoltaic module 3 can be the weight value of the photovoltaic module 3 alone or the total of the weight values (also referred to as a total weight value) of the photovoltaic module 3 and the components other than the photovoltaic module 3.

The measurement device 1 in this example includes the output characteristic measurer 10 and the weight measurer 20, allowing the output characteristics and the weight of the photovoltaic module 3 as a measurement target to be measured under similar conditions. This can improve, for example, the measurement accuracy of the index value for the output characteristics of the photovoltaic module 3 such as the maximum output value per unit weight of the photovoltaic module 3.

The weight measurer 20 includes, for example, a portion (also referred to as a holder) 22 that can hold the photovoltaic module 3 under predetermined placement conditions. In the first embodiment, the holder 22 can support, for example, the photovoltaic module 3 from below. More specifically, the holder 22 can support, for example, the photovoltaic module 3 from below with the first surface 3a facing vertically downward. The photovoltaic module 3 can thus be, for example, held stably. In this example, the predetermined placement conditions include the first surface 3a facing vertically downward at a predetermined position. The vertical direction herein refers to the direction of gravity or a direction perpendicular to the surface of the earth (also referred to as the surface of the ground), the ground, or the surface of a floor (also referred to as floor surface). The vertically downward direction refers to the direction of gravity. The vertically downward direction (also referred to as a downward direction) may include, for example, a direction at an angle to the downward direction within a few degrees (also referred to as a substantially downward direction) and a direction at angle to the downward direction within about 10 degrees. In the example of FIG. 1, the holder 22 is an annular stage. The annular stage includes a through-hole 20t extending vertically. The annular stage supports the peripheral edge of the first surface 3a from below to hold the photovoltaic module 3. With the holder 22 holding the photovoltaic module 3 in such a manner, light emitted from the light source 30 can travel through the through-hole 20t to be incident on the first surface 3a of the photovoltaic module 3.

In this example, the weight of at least a part of the first wiring W1 may act on the photovoltaic module 3 held by the holder 22 under predetermined placement conditions. The weight measurer 20 may measure, for example, the weight value of the photovoltaic module 3 excluding the weight value of at least the part of the first wiring W1. In other words, the weight measurer 20 may set a reference point (zero point) for the weight value adjusted by, for example, reflecting the weight value of at least the part of the first wiring W1 (also referred to as performing offset adjustment). The weight value of at least the part of the first wiring W1 may be, for example, preset or obtained through measurement with, for example, the weight measurer 20.

### 1-2-3. Light Source

The light source 30 can illuminate, for example, the first surface 3a of the photovoltaic module 3. The light source 30 can illuminate, for example, the first surface 3a of the photovoltaic module 3 uniformly. The light source 30 may emit, for example, fixed light or pulsed light. Fixed light may be emitted using, for example, a halogen lamp or a metal halide lamp. Pulsed light may be emitted using, for example, a xenon lamp. Pulsed light may be, for example, light with a relatively short emission duration (also referred to as short pulse light) or light with a relatively long emission duration (also referred to as long pulse light). The short pulse light may have, for example, an emission duration of about 0.5 to several milliseconds. The long pulse light may have, for example, an emission duration of about 5 to several hundred milliseconds.

In the first embodiment, the light source 30 can illuminate, for example, the first surface 3a of the photovoltaic module 3 held by the holder 22 under predetermined placement conditions. In the example of FIG. 1, the light source 30 can be installed on the floor to emit light upward. The light source 30 includes a housing 31 that serves as a base placed on, for example, the floor. The housing 31 includes, for example, an annular top portion 3 1u defining an opening 31o that allows passage of light. The weight measurer 20 is located, for example, on the annular top portion 31u to have the through-hole 20t aligned above the opening 31o. This allows, for example, light traveling upward through the opening 31o from the light source 30 to be incident on the first surface 3a of the photovoltaic module 3 held by the holder 22 under predetermined placement conditions through the through-hole 20t. The light source controller 40 can control, for example, the light source 30 to emit predetermined artificial sunlight.

The output characteristic measurer 10 can measure, for example, the output voltage value and the output current value while the light source 30 is illuminating the first surface 3a of the photovoltaic module 3 held by the holder 22 under predetermined placement conditions. The weight measurer 20 can measure, for example, the weight value of the photovoltaic module 3 held by the holder 22 under predetermined placement conditions. In other words, the measurement device 1 can measure, for example, the output characteristics and the weight of the photovoltaic module 3 held under predetermined placement conditions. This allows the output characteristics and the weight of the photovoltaic module 3 as a measurement target to be measured under similar conditions. This can improve, for example, the measurement accuracy of the index value for the output characteristics of the photovoltaic module 3 such as the maximum output value per unit weight of the photovoltaic module 3.

### 1-2-4. Controller

The controller 50 can control, for example, the components of the measurement device 1 other than the controller 50. The controller 50 can thus centrally manage, for example, the operation of the measurement device 1. The controller 50 is, for example, an arithmetic processor including an arithmetic unit 51 and a storage 52.

The arithmetic unit 51 includes at least one processor to provide, for example, control and processing power for implementing various functions. The at least one processor may include, for example, a single integrated circuit (IC), multiple ICs connected to one another for mutual communication, or discrete circuits. The at least one processor may be, for example, implemented in accordance with various known techniques. The processor includes, for example, at least one circuit or unit to perform at least one data calculation procedure or process by executing an instruction stored in an associated memory. The processor may be a piece of firmware (e.g., a discrete logic component) to perform one or more data computation procedures or processes. The processor may include one or more processors, controllers, microprocessors, microcontrollers, application-specific integrated circuits (ASICs), digital signal processors, programmable logic devices, field-programmable gate arrays or include any combination of these devices or components or any combination of other known devices and components to perform the functions described below. The arithmetic unit 51 may be, for example, a central processing unit (CPU), which is an electric circuit.

The storage 52 includes, for example, a non-transitory storage medium readable by the arithmetic unit 51. Non-transitory storage media readable by the arithmetic unit 51 may include, for example, a read-only memory (ROM), a random-access memory (RAM), a small hard disk drive, and a solid-state drive (SSD). The ROM may be, for example, a flash ROM (flash memory), which is a non-volatile memory. The RAM is, for example, a volatile memory. The storage 52 stores, for example, one or more programs 52p for controlling the operation and the various arithmetic operations performed by the measurement device 1. The storage 52 includes at least one storage medium that includes, for example, one storage medium or two or more storage media. The storage 52 can store, for example, various items of data (also referred to as various data items) 52d. The various data items 52d may include, for example, data obtained during arithmetic operations performed by the arithmetic unit 51, data obtained as a result of arithmetic operations performed by the arithmetic unit 51, and data used for arithmetic operations performed by the arithmetic unit 51. The measurement device 1 may include, for example, a storage medium external to the controller 50.

### 1-2-5. Input Device

The input device 60 is connected to, for example, the controller 50. The input device 60 can receive the input of various items of information in response to, for example, user operations on the measurement device 1. The input device 60 may include, for example, at least one of an operation unit such as a keyboard, a mouse, a touchscreen, or a switch, a microphone for voice input, or a communication unit that can receive inputs of signals from external devices through communication lines. The user can thus easily input, for example, various items of information into the measurement device 1. The input device 60 may include, for example, any number of operation units or any number of microphones.

### 1-2-6. Output Device

The output device 70 is connected to, for example, the controller 50. The output device 70 can output, for example, various items of information. The output of various items of information from the output device 70 may include, for example, visual output of various items of information, audible output, and output of data to external devices. More specifically, the output device 70 may be include, for example, at least one of a display that can output various items of information visually, a speaker that can output various items of information audibly, or a communication unit that can output signals for various items of information to external devices through communication lines. The output device 70 may include, for example, any number of displays, any number of speakers, or any number of communication units. When the input device 60 includes a touchscreen, the operation unit of the input device 60 and the display of the output device 70 may be a single touchscreen. The communication unit in the input device 60 and the communication unit in the output device 70 may be, for example, the same or different components.

### 1-2-7. Functional Components Implemented by Controller

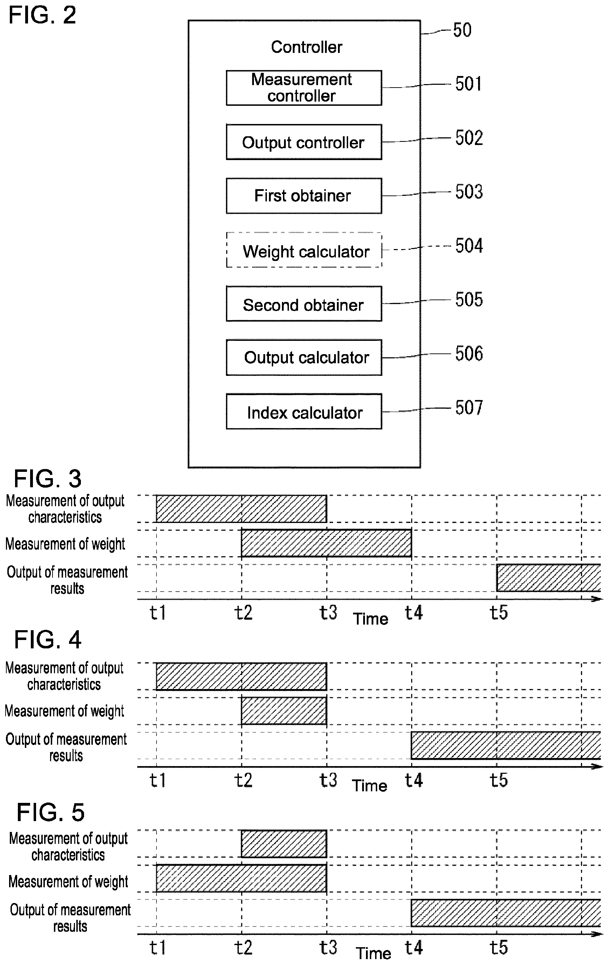

In the controller 50, the arithmetic unit 51 executes, for example, one or more programs 52p stored in the storage 52 to implement various functional components. As illustrated in FIG. 2, the various functional components include, for example, a measurement controller 501, an output controller 502, a first obtainer 503, a second obtainer 505, an output calculator (also referred to as a second calculator) 506, and an index calculator (also referred to as a third calculator) 507.

The measurement controller 501 can control, for example, emission from the light source 30 with the light source controller 40. The measurement controller 501 can also control, for example, the light source controller 40 and the output characteristic measurer 10 to measure, in synchronization with the emission from the light source 30, the output voltage value and the output current value for determining the value for the output characteristic (also referred to as an output characteristic value) of the photovoltaic module 3. In other words, the measurement controller 501 can control, for example, the operation of measuring the output voltage value and the output current value of the photovoltaic module 3 (also referred to as output measurement) performed by the output characteristic measurer 10. The output measurement includes, for example, measuring, with the output characteristic measurer 10, the output voltage value and the output current value of the photovoltaic module 3 with the first surface 3 a receiving light while changing the resistance value of the variable resistor in a stepwise manner. The output characteristic values of the photovoltaic module 3 may include, for example, a short circuit current value, an open circuit voltage value, a maximum output value (also referred to as an output power value), and a fill factor (FF).

The measurement method for the output voltage value and the output current value (also referred to as the output measurement method) with the emission from the light source 30 and the output characteristic measurer 10 includes, for example, a method using fixed light (also referred to as a fixed light method) or a method using pulsed light (also referred to as a pulsed light method). The pulsed light method includes, for example, emitting multiple short pulses of light (also referred to as a short-pulse method) or emitting a single long pulse of light (also referred to as a long-pulse method). When, for example, the output measurement method uses fixed light, the output characteristic measurer 10 measures the output voltage value and the output current value while the light source 30 is illuminating the first surface 3a of the photovoltaic module 3 with fixed light. When the output measurement method uses short pulses of light, the output characteristic measurer 10 measures the output voltage value and the output current value while, for example, the light source 30 is illuminating the first surface 3a of the photovoltaic module 3 with multiple short pulses of light. When the output measurement method uses a long pulse of light, the output characteristic measurer 10 measures the output voltage value and the output current value while, for example, the light source 30 is illuminating the first surface 3a of the photovoltaic module 3 with a single long pulse of light. For the photovoltaic module 3 including, for example, photovoltaic cells made of an organic semiconductor with relatively slow light response speed, the output is measured with the fixed light method. For the photovoltaic module 3 including, for example, photovoltaic cells made of a compound semiconductor with not relatively slow light response speed, the output is measured with the long-pulse method. For the photovoltaic module 3 including, for example, photovoltaic cells made of a crystalline semiconductor with relatively fast light response speed, the output is measured with the short-pulse method.

The measurement controller 501 can control, for example, the operation of measuring the weight value (also referred to as weight measurement) of the photovoltaic module 3 with the weight measurer 20. The measurement controller 501 can thus control, for example, the timing at which the output characteristic measurer 10 performs the output measurement and the timing at which the weight measurer 20 performs the weight measurement. In other words, the measurement controller 501 can control, for example, the period in which the output characteristic measurer 10 measures the output voltage value and the output current value of the photovoltaic module 3 (also referred to as a first measurement period) and the period in which the weight measurer 20 measures the weight of the photovoltaic module 3 (also referred to as a second measurement period). In the first measurement period, one photovoltaic module 3 undergoes, for example, the output measurement. In the second measurement period, one photovoltaic module 3 undergoes, for example, the output measurement one or more times. When, for example, the weight measurement is performed two or more times in the second measurement period, a statistic value for two or more weight values obtained from two or more measurements performed on the photovoltaic module 3 may be used as the weight value of the photovoltaic module 3. The statistic value for two or more weight values may be, for example, the mean or the median of two or more weight values.

As illustrated in, for example, FIGs. 3 to 6, the controller 50 may control the light source 30, the output characteristic measurer 10, and the weight measurer 20 to cause the first measurement period and the second measurement period to at least partially overlap each other. Such control allows, for example, the output characteristics and the gravity of the photovoltaic module 3 to be measured under similar conditions. The control can also shorten, for example, the time for measuring the output characteristics and the weight of the photovoltaic module 3. In the first measurement period, the light source 30 may emit, for example, light multiple times. In this case, the weight measurer 20 may perform the weight measurement upon each emission from the light source 30 or between emissions from the light source 30.

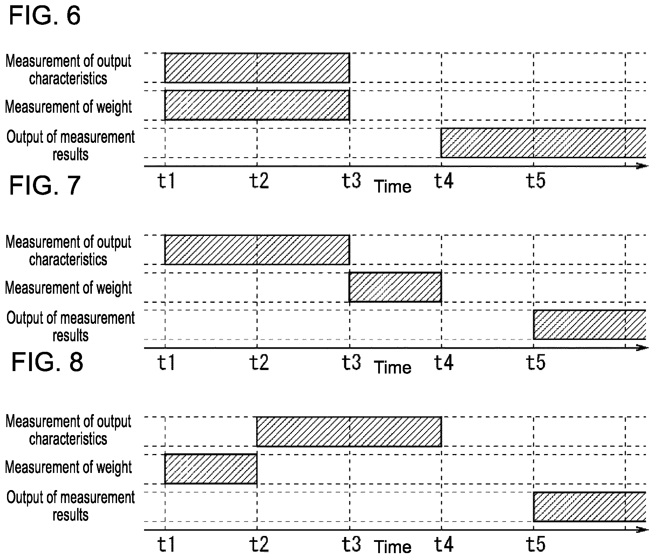

As illustrated in, for example, FIG. 4, the controller 50 may control the light source 30, the output characteristic measurer 10, and the weight measurer 20 to cause the second measurement period to be included in the first measurement period. As illustrated in, for example, FIG. 5, the controller 50 may control the light source 30, the output characteristic measurer 10, and the weight measurer 20 to cause the first measurement period to be included in the second measurement period. As illustrated in, for example, FIG. 6, the controller 50 may control the light source 30, the output characteristic measurer 10, and the weight measurer 20 to cause the first measurement period and the second measurement period to have the same duration. Such control operations allow, for example, the output characteristics and the gravity of the photovoltaic module 3 to be measured under more similar conditions. The control operations can also shorten, for example, the time for measuring the output characteristics and the weight.

As illustrated in, for example, FIGs. 7 and 8, the controller 50 may control the light source 30, the output characteristic measurer 10, and the weight measurer 20 to avoid overlap between the first measurement period and the second measurement period. The second measurement period may start after the first measurement period as illustrated in, for example, FIG. 7. The first measurement period may start after the second measurement period as illustrated in, for example, FIG. 8. In such examples, a shorter interval between the first measurement period and the second measurement period allows the output characteristics and the gravity of the photovoltaic module 3 to be measured under more similar conditions and shortens the time for measuring the output characteristics and the weight.

The output controller 502 can control, for example, the output of various items of information from the output device 70. More specifically, for example, the output controller 502 transmits signals for various items of information to the output device 70 to cause the output device 70 to output various items of information.

The first obtainer 503 can obtain, for example, the weight value of the photovoltaic module 3 measured by the weight measurer 20. The first obtainer 503 can obtain the weight value of the photovoltaic module 3 by, for example, receiving a signal from the weight measurer 20. When, for example, the weight measurement is performed two or more times in the second measurement period described above, the first obtainer 503 may obtain two or more weight values of the photovoltaic module 3 obtained in the two or more measurements. The first obtainer 503 may then calculate, for example, a statistic value for the two or more weight values and obtain the statistic value as the weight value of the photovoltaic module 3. The statistic value for two or more weights may be, for example, the mean or the median of two or more weight values. The controller 50 may cause, for example, the output device 70 controlled by the output controller 502 to output information indicating the weight value of the photovoltaic module 3 measured by the weight measurer 20 and obtained by the first obtainer 503. In other words, the output device 70 may output, for example, information indicating the weight value of the photovoltaic module 3 measured by the weight measurer 20. This allows, for example, the user of the measurement device 1 to easily learn the weight value of the photovoltaic module 3.

The second obtainer 505 can obtain, for example, the output voltage value and the output current value of the photovoltaic module 3 measured by the output characteristic measurer 10. The second obtainer 505 can obtain the output voltage value and the output current value of the photovoltaic module 3 by, for example, receiving a signal from the output characteristic measurer 10.

The output calculator 506 can calculate, for example, the output power value of the photovoltaic module 3 based on the output voltage value and the output current value of the photovoltaic module 3 measured by the output characteristic measurer 10. The output calculator 506 can obtain, for example, the relationship between the output current value (I) and the output voltage value (V) (also referred to as I-V characteristics) based on the output voltage value and the output current value measured by the output characteristic measurer 10 while the resistance value of the variable resistor is being varied in a stepwise manner. The output calculator 506 can then calculate, for example, the maximum output value (Pm) as the output power value based on the I-V characteristics. The output calculator 506 may calculate, for example, other output characteristic values such as a short circuit current value (Isc), an open circuit voltage value (Voc), and an FF based on the I-V characteristics.

The controller 50 may cause, for example, the output device 70 controlled by the output controller 502 to output information indicating the weight value of the photovoltaic module 3 obtained from the weight measurer 20 by the first obtainer 503 and information indicating the output power value calculated by the output calculator 506. In other words, the output device 70 may output, for example, information indicating the weight value of the photovoltaic module 3 measured by the weight measurer 20 and information indicating the output power value calculated by the output calculator 506. This allows, for example, the user of the measurement device 1 to easily learn the weight value and the output power value of the photovoltaic module 3. The information indicating the weight value of the photovoltaic module 3 and the information indicating the output power value calculated by the output calculator 506 may be output in the form of data to an external device. In this case, the output device 70 may output, to an external device, the information indicating the weight value and the information indicating the output power value resulting from the weight measurement and the output measurement performed on one photovoltaic module 3 as a measurement target in a manner associated with each other in the form of data.

The index calculator 507 can calculate an index value through a predetermined arithmetic operation including, for example, dividing the output power value calculated by the output calculator 506 by the weight value of the photovoltaic module 3 measured by the weight measurer 20. The index calculator 507 can use, for example, the weight value of the photovoltaic module 3 measured by the weight measurer 20 and obtained by the first obtainer 503. The predetermined arithmetic operation may include, for example, dividing the output power value of the photovoltaic module 3 by the weight value of the photovoltaic module 3. In this case, the index value is the output power value per unit weight of the photovoltaic module 3. The predetermined arithmetic operation may include, for example, a predetermined calculation performed on the output power value per unit weight in accordance with, for example, the measurement conditions with the measurement device 1 and the shape of the photovoltaic module 3. The predetermined calculation may include, for example, multiplying the output power value by a coefficient determined in accordance with the measurement conditions for the output measurement and the weight measurement with the measurement device 1 and the shape of the photovoltaic module 3. The measurement conditions may include, for example, temperature, air pressure, and air mass (AM). The shape of the photovoltaic module 3 may include, for example, the curvature of the first surface 3a and the thickness of the photovoltaic module 3.

The controller 50 may cause, for example, the output device 70 controlled by the output controller 502 to output information indicating the index value calculated by the index calculator 507. In other words, the output device 70 may output, for example, information indicating the index value calculated by the index calculator 507. This allows, for example, the user of the measurement device 1 to easily learn the index value obtained through an arithmetic operation including the division of the output power value by the weight value of the photovoltaic module 3.

### 1-2-8. Others

The measurement device 1 may also include, for example, a temperature sensor 80. This allows detection of the temperature of the measurement device 1 at measurement. For example, the temperature of a room in which the measurement device 1 is installed may be adjusted with an air conditioning system to adjust the temperature of the measurement device 1. The temperature of the measurement device 1 at measurement may be set to, for example, a reference temperature. The reference temperature may be, for example, a temperature of about 25 °C. The temperature sensor 80 may be, for example, a contact temperature sensor or a non-contact temperature sensor. The contact temperature sensor may be, for example, a thermocouple, a platinum resistance thermometer, a thermistor thermometer, a bimetallic thermometer, a liquid filled thermometer, or a mercury thermometer. The non-contact temperature sensor may be, for example, a radiation thermometer.

The measurement device 1 may include, for example, an outer wall 2 to surround the main components such as the output characteristic measurer 10, the weight measurer 20, and the light source 30 when the output measurement and the weight measurement are performed on the photovoltaic module 3 as a measurement target. The outer wall 2 includes, for example, a door or a shutter to allow loading of the photovoltaic module 3. The outer wall 2 may block, for example, light with a wavelength that can be photoelectrically converted by the photovoltaic module 3 (also referred to as being light-shielding). In this case, the measurement device 1 reduces disturbance light entering the first surface 3a of the photovoltaic module 3 from outside the measurement device 1 when performing the output measurement on the photovoltaic module 3 as a measurement target. This may improve, for example, the accuracy of measuring the output characteristics of the photovoltaic module 3 with the measurement device 1. The outer wall 2 reduces, for example, wind from outside the measurement device 1 acting on the photovoltaic module 3. This may improve, for example, the accuracy of measuring the weight of the photovoltaic module 3 with the measurement device 1.

In the first embodiment, the photovoltaic module 3 may include, for example, a heat insulator 4 on the second surface 3b for the output measurement performed on the photovoltaic module 3 as a measurement target. This allows, for example, the temperature of the photovoltaic module 3 to be constant during the output measurement performed on the photovoltaic module 3 as a measurement target. This may thus improve, for example, the accuracy of measuring the output characteristics of the photovoltaic module 3 with the measurement device 1. In the above structure, the weight measurer 20 may receive, for example, the weight of the heat insulator 4 in addition to the weight of the photovoltaic module 3. The weight measurer 20 may thus measure, for example, the weight value of the photovoltaic module 3 excluding the weight value of the heat insulator 4. In other words, the weight measurer 20 may set a reference point (zero point) for the weight value adjusted by, for example, reflecting the weight value of the components other than the photovoltaic module 3 such as the heat insulator 4 (or perform offset adjustment). The weight value of the heat insulator 4 may be, for example, preset or obtained through measurement with, for example, the weight measurer 20. The first obtainer 503 may obtain, from the weight measurer 20, the total value (total weight value) of the weight value of the photovoltaic module 3 and the weight values of the components other than the photovoltaic module 3 such as the heat insulator 4. In this case, the functional components implemented by the controller 50 may include, for example, a weight calculator (also referred to as a first calculator) 504 that calculates the weight value of the photovoltaic module 3 by subtracting the weight values of the components other than the photovoltaic module 3 from the total weight value. The weight values of the components other than the photovoltaic module 3 such as the heat insulator 4 may be, for example, preset or obtained through measurement with, for example, the weight measurer 20.

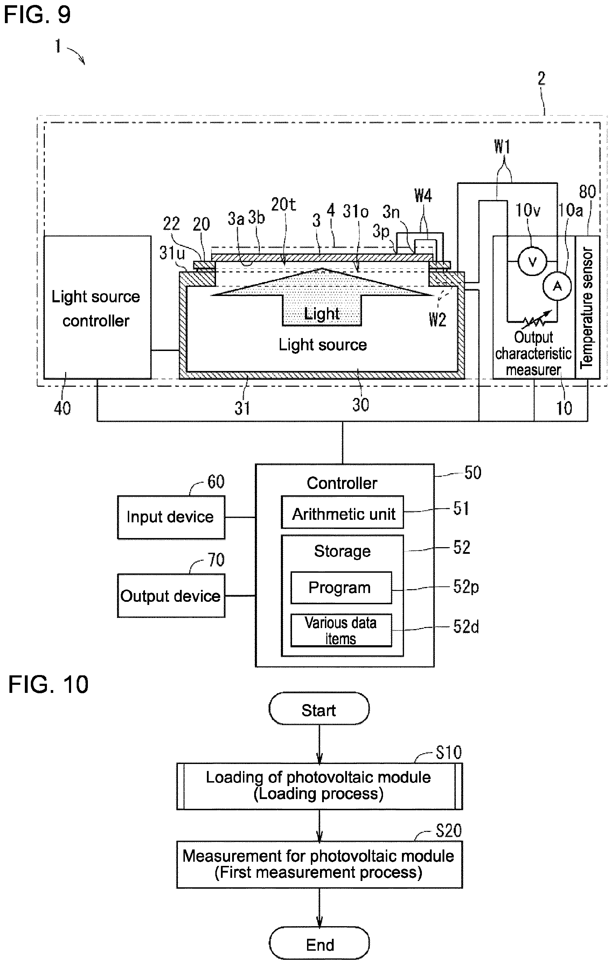

As illustrated in, for example, FIG. 9, the weight measurer 20 may include wiring (second wiring) W2 that can electrically connect the first wiring W1 to the first terminal 3p and the second terminal 3n of the photovoltaic module 3 held by the holder 22 under predetermined placement conditions. The weight measurement performed by the weight measurer 20 may thus be, for example, less likely to be affected by the weight of the first wiring W1, improving the accuracy of measuring the weight of the photovoltaic module 3. The structure also allows the output characteristics and the weight of the photovoltaic module 3 to be measured accurately under the same or similar placement conditions.

The second wiring W2 includes, for example, a first wire (also referred to as a 2A-wire) and a second wire (also referred to as a 2B-wire). The first 2A-wire is, for example, electrically connected to the first 1A-wire in the first wiring W1. The second 2B-wire is, for example, connected to the second 1B-wire in the first wiring W1. Each of the 2A-wire and the 2B-wire includes, for example, a conductive wire with its outer periphery covered with an insulator such as resin. The first wiring W1 and the second wiring W2 may be connected in, for example, any of the manners including connector connection, pin-terminal connection, button connecting, or slide-in connection. The second wiring W2 may include, for example, a portion extending through the weight measurer 20 or a portion extending on the surface of the weight measurer 20.

The second wiring W2 may be, for example, electrically connected to the first terminal 3p and the second terminal 3n with wiring (also referred to as fourth wiring) W4. The fourth wiring W4 includes, for example, a first wire (also referred to as a 4A-wire) and a second wire (also referred to as a 4B-wire). The first 4A-wire is, for example, electrically connected to the first 2A-wire in the second wiring W2 and to the first terminal 3p. The second 4B-wire is, for example, connected to the second 2B-wire in the second wiring W2 and electrically connected to the second terminal 3n. The second wiring W2 may be connected to the fourth wiring W4 in, for example, any of the manners including connector connection, pin-terminal connection, button connection, and slide-in connection. The measurement device 1 can perform the output measurement and the weight measurement with, for example, the first wiring W1 electrically connected to the first terminal 3p and the second terminal 3n of the photovoltaic module 3 with the second wiring W2 and the fourth wiring W4 connected in this order between the first wiring W1 and the terminals 3p and 3n. In this case, the weight measurer 20 may measure, for example, the weight value of the photovoltaic module 3 excluding the weight value of the fourth wiring W4. In other words, the weight measurer 20 may set a reference point (zero point) for the weight value adjusted by, for example, reflecting the weight value of the fourth wiring W4 (or perform offset adjustment). The first obtainer 503 may obtain, from the weight measurer 20, the total value (total weight value) of the weight value of the photovoltaic module 3 and the weight values of the components other than the photovoltaic module 3 including the fourth wiring W4. In this case, the functional components implemented by the controller 50 may include, for example, the weight calculator 504 that calculates the weight value of the photovoltaic module 3 by subtracting the weight values of the components other than the photovoltaic module 3 including the fourth wiring W4 from the total weight value. The weight values of the components other than the photovoltaic module 3 including the fourth wiring W4 may be, for example, preset or obtained through measurement with, for example, the weight measurer 20.

### 1-3. Measurement Method for Photovoltaic Module

The measurement device 1 described above may be used to, for example, implement a method for measuring the quantitative characteristics of the photovoltaic module 3 (also referred to as a measurement method for a photovoltaic module). As illustrated in, for example, FIG. 10, the measurement method for the photovoltaic module 3 includes a process in step S10 (also referred to as a loading process) and a process in step S20 (also referred to as a first measurement process). The loading process in step S10 is performed, for example, before the first measurement process in step S20.

In the loading process in step S10, the photovoltaic module 3 is loaded onto the measurement device 1. In the loading process, the photovoltaic module 3 may be loaded onto the measurement device 1 by, for example, the user manually or by a robot. The operation of the robot may be controlled by, for example, the controller 50. The operation of the robot may be controlled by the controller 50 in accordance with, for example, various items of information input in response to user operations performed on the input device 60 or various functions implemented by the arithmetic unit 51 executing one or more programs 52p stored in the storage 52.

In the first measurement process in step S20, for example, the measurement device 1 measures, with the output characteristic measurer 10, the output voltage value and the output current value between the first terminal 3p and the second terminal 3n of the photovoltaic module 3 and measures, with the weight measurer 20, the weight value of the photovoltaic module 3. The measurement controller 501 may control, for example, the output measurement and the weight measurement.

In this example, the measurement method for the photovoltaic module 3 includes the loading process and the first measurement process. The single measurement device 1 allows the output characteristics and the weight of the photovoltaic module 3 as a measurement target to be measured under similar conditions. This can improve the measurement accuracy of the index value for the output characteristics of the photovoltaic module 3 such as the output power value per unit weight of the photovoltaic module 3.

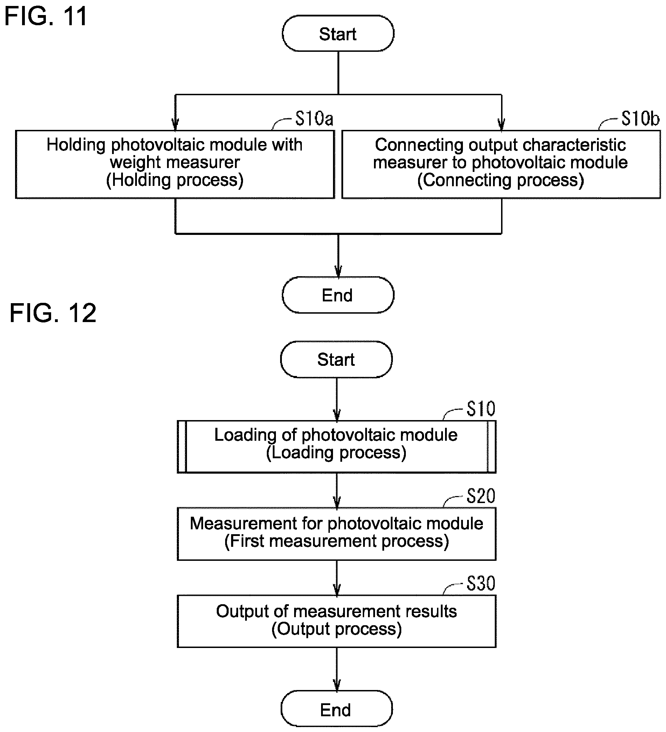

As illustrated in, for example, FIG. 11, the loading process in step S10 may include a process in step S10a (also referred to as a holding process) and a process in step S10b (also referred to as a connecting process). The holding process in step S10a and the connecting process in step S10b may be performed, for example, in any order or performed at the same time.

In the holding process in step S10a, the photovoltaic module 3 is, for example, held under predetermined placement conditions by the holder 22 included in the weight measurer 20. In the first embodiment, the holding process includes, for example, supporting, with the holder 22, the photovoltaic module 3 from below. More specifically, the holding process includes, for example, supporting, with the holder 22, the photovoltaic module 3 from below with the first surface 3a facing vertically downward. In other words, the photovoltaic module 3 is supported, for example, from below by the holder 22 with the first surface 3a of the photovoltaic module 3 facing vertically downward. The photovoltaic module 3 can thus be, for example, held stably. In this example, the predetermined placement conditions include the first surface 3a facing vertically downward at a predetermined position.

In the connecting process in step S10b, the first wiring W1 in the output characteristic measurer 10 is, for example, electrically connected to the first terminal 3p and the second terminal 3n. The first wiring W1 may be electrically connected to the first terminal 3p and the second terminal 3n by, for example, the user manually or by a robot. The operation of the robot may be controlled by, for example, the controller 50. The operation of the robot may be controlled by the controller 50 in accordance with, for example, various items of information input in response to user operations performed on the input device 60 or various functions implemented by the arithmetic unit 51 executing one or more programs 52p stored in the storage 52.

The first measurement process in step S20 includes, for example, holding, with the holder 22, the photovoltaic module 3 under predetermined placement conditions. The output characteristic measurer 10 then measures, for example, the output voltage value and the output current value between the first terminal 3p and the second terminal 3n of the photovoltaic module 3 while the light source 30 is illuminating the first surface 3a of the photovoltaic module 3. The first measurement process in step S20 also includes, for example, measuring, with the weight measurer 20, the weight value of the photovoltaic module 3 held by the holder 22 under predetermined placement conditions. In other words, the output characteristics and the weight of the photovoltaic module 3 held, for example, under predetermined placement conditions are measured. This allows, for example, the output characteristics and the weight of the photovoltaic module 3 as a measurement target to be measured under similar conditions. This can improve, for example, the measurement accuracy of the index value for the output characteristics of the photovoltaic module 3 such as the output power value per unit weight of the photovoltaic module 3.

As illustrated in, for example, FIGs. 3 to 6, the first measurement process in step S20 may include controlling, with the controller 50, the light source 30, the output characteristic measurer 10, and the weight measurer 20 to cause the first measurement period and the second measurement period to at least partially overlap each other. In the first measurement period, the output characteristic measurer 10 measures the output voltage value and the output current value of the photovoltaic module 3 as described above. In the second measurement period, the weight measurer 20 measures the weight of the photovoltaic module 3 as described above. Such control allows, for example, the output characteristics and the gravity of the photovoltaic module 3 to be measured under similar conditions. Such control may also shorten, for example, the time for measuring the output characteristics and the weight of the photovoltaic module 3. In the first measurement period, the light source 30 may emit, for example, light multiple times. In this case, the weight measurer 20 may perform the weight measurement upon each emission from the light source 30 or between emissions from the light source 30.

As illustrated in, for example, FIG. 4, the first measurement process in step S20 may include, for example, controlling, with the controller 50, the light source 30, the output characteristic measurer 10, and the weight measurer 20 to cause the second measurement period to be included in the first measurement period. As illustrated in, for example, FIG. 5, the first measurement process in step S20 may include, for example, controlling, with the controller 50, the light source 30, the output characteristic measurer 10, and the weight measurer 20 to cause the first measurement period to be included in the second measurement period. As illustrated in, for example, FIG. 6, the first measurement process in step S20 may include controlling, with the controller 50, the light source 30, the output characteristic measurer 10, and the weight measurer 20 to cause the first measurement period and the second measurement period to have the same duration. Such control operations allow, for example, the output characteristics and the gravity of the photovoltaic module 3 to be measured under more similar conditions. The control operations may also shorten, for example, the time for measuring the output characteristics and the weight.

As illustrated in, for example, FIGs. 7 and 8, the first measurement process in step S20 may include, for example, controlling, with the controller 50, the light source 30, the output characteristic measurer 10, and the weight measurer 20 to avoid overlap between the first measurement period and the second measurement period. The second measurement period may start after the first measurement period as illustrated in, for example, FIG. 7. The first measurement period may start after the second measurement period as illustrated in, for example, FIG. 8. In such examples, a shorter interval between the first measurement period and the second measurement period may allow the output characteristics and the gravity of the photovoltaic module 3 to be measured under more similar conditions. The control operations may also shorten, for example, the time for measuring the output characteristics and the weight.

The connecting process in step S10b may include electrically connecting the first wiring W1 to the first terminal 3p and the second terminal 3n with the second wiring W2 included in the weight measurer 20, as illustrated in, for example, FIG. 9. The weight measurement performed by the weight measurer 20 may thus be, for example, less likely to be affected by the weight of the first wiring W1, improving the accuracy of measuring the weight of the photovoltaic module 3. The structure also allows the output characteristics and the weight of the photovoltaic module 3 to be measured accurately under the same or similar placement conditions.

As illustrated in, for example, FIG. 12, the measurement method for the photovoltaic module 3 may include, for example, the loading process in step S10, the first measurement process in step S20, and a process in step S30 (also referred to as an output process). In this example, the loading process in step S10 and the first measurement process in step S20 are performed before the output process in step S30. In the output process, the output device 70 may output, for example, information indicating the weight value of the photovoltaic module 3 measured by the weight measurer 20 in the first measurement process in step S20. In the output process, the controller 50 may cause, for example, the output device 70 to output information indicating the weight value of the photovoltaic module 3. More specifically, the output controller 502 may control, for example, the output device 70 to output information indicating the weight value of the photovoltaic module 3 obtained from the weight measurer 20 by the first obtainer 503. This allows, for example, the user of the measurement device 1 to easily learn the weight value of the photovoltaic module 3. After the information indicating the weight value of the photovoltaic module 3 is obtained, the output process in step S30 may be, for example, started in the middle of the first measurement process in step S20. The information indicating the weight value of the photovoltaic module 3 may be, for example, output in the form of data to an external device. In this case, the output device 70 may output, to an external device, the information indicating the weight value and the information indicating the output voltage value and the output current value resulting from the weight measurement and the output measurement performed on one photovoltaic module 3 as the measurement target in a manner associated with each other in the form of data.

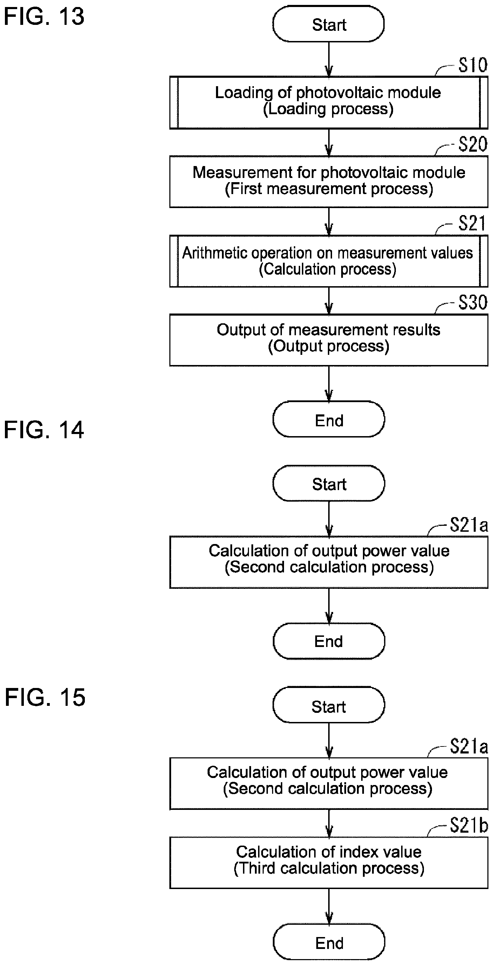

As illustrated in, for example, FIG. 13, the measurement method for the photovoltaic module 3 may include the loading process in step S10, the first measurement process in step S20, a process in step S21 (also referred to as a calculation process), and the output process in step S30. The calculation process in step S21 is performed, for example, between the first measurement process in step S20 and the output process in step S30. The calculation process includes, for example, performing an arithmetic operation on the value (also referred to as a measurement value) obtained in the first measurement process in step S20. The arithmetic operation is performed by, for example, the controller 50.

The calculation process in step S21 may include a process in step S21a (also referred to as a second calculation process), as illustrated in, for example, FIG. 14. In other words, the measurement method for the photovoltaic module 3 may include, for example, the loading process in step S10, the first measurement process in step S20, the second calculation process in step S21a, and the output process in step S30. In the second calculation process, the output calculator 506 may calculate, for example, the output power value of the photovoltaic module 3 based on the output voltage value and the output current value of the photovoltaic module 3 measured by the output characteristic measurer 10 in the first measurement process in step S20. The output calculator 506 obtains, for example, the relationship between the output current value (I) and the output voltage value (V) (I-V characteristics) based on the output voltage value and the output current value measured by the output characteristic measurer 10 while the resistance value of the variable resistor is being varied in a stepwise manner. The output calculator 506 may then calculate, for example, the maximum output value (Pm) as the output power value based on the I-V characteristics. The output calculator 506 may calculate, for example, other output characteristic values such as a short circuit current value (Isc), an open circuit voltage value (Voc), and an FF based on the I-V characteristics.

The output process in step S30 may include, for example, outputting, with the output device 70, information indicating the weight value of the photovoltaic module 3 measured by the weight measurer 20 in the first measurement process in step S20 and information indicating the output power value calculated by the output calculator 506 in the second calculation process in step S21a. In the output process, the controller 50 may cause, for example, the output device 70 to output the information indicating the weight value of the photovoltaic module 3 and the information indicating the output power value calculated in the second calculation process in step S21a. More specifically, the output controller 502 may control, for example, the output device 70 to output the information indicating the weight value of the photovoltaic module 3 obtained from the weight measurer 20 by the first obtainer 503 and the information indicating the output power value calculated by the output calculator 506. This allows, for example, the user of the measurement device 1 to easily learn the weight value and the output power value of the photovoltaic module 3. The information indicating the weight value of the photovoltaic module 3 and the information indicating the output power value calculated by the output calculator 506 may be output in the form of data to an external device. In this case, the output device 70 may output, to an external device, the information indicating the weight value and the information indicating the output power value resulting from the weight measurement and the output measurement performed on one photovoltaic module 3 as a measurement target in a manner associated with each other in the form of data.

As illustrated in, for example, FIG. 15, the calculation process in step S21 may include the second calculation process in step S21a and a process in step S21b (also referred to as a third calculation process). In other words, the measurement method for the photovoltaic module 3 may include, for example, the loading process in step S10, the first measurement process in step S20, the second calculation process in step S21a, the third calculation process in step S21b, and the output process in step S30. The third calculation process may include, for example, calculating, with the index calculator 507, an index value through a predetermined arithmetic operation that includes dividing the output power value calculated by the output calculator 506 in the second calculation step in step S21a by the weight value of the photovoltaic module 3 measured by the weight measurer 20 in the first measurement step in step S20. The index calculator 507 can use, for example, the weight value of the photovoltaic module 3 measured by the weight measurer 20 and obtained by the first obtainer 503. The predetermined arithmetic operation may include, for example, dividing the output power value of the photovoltaic module 3 by the weight value of the photovoltaic module 3. In this case, the index value is the output power value per unit weight of the photovoltaic module 3. The predetermined arithmetic operation may include, for example, a predetermined calculation performed on the output power value per unit weight in accordance with, for example, the measurement conditions with the measurement device 1 and the shape of the photovoltaic module 3. The predetermined calculation may include, for example, multiplying the output power value by a coefficient determined in accordance with the measurement conditions for the output measurement and the weight measurement with the measurement device 1 and the shape of the photovoltaic module 3. The measurement conditions may include, for example, temperature, air pressure, and AM. The shape of the photovoltaic module 3 may include, for example, the curvature of the first surface 3a and the thickness of the photovoltaic module 3.

The output process in step S30 may include, for example, outputting, with the output device 70, information indicating the index value calculated by the index calculator 507 in the third calculation process in step S21b. In the output process, the controller 50 may cause, for example, the output device 70 to output information indicating the index value calculated in the third calculation process in step S21b. More specifically, the output controller 502 may cause, for example, the output device 70 to output the information indicating the index value calculated in the third calculation process in step S21b. This allows, for example, the user of the measurement device 1 to easily learn the index value obtained through the arithmetic operation including dividing the output power value of the photovoltaic module 3 by the weight value. 1-4. Overview of First Embodiment

As described above, the measurement device 1 for the photovoltaic module 3 includes, for example, the output characteristic measurer 10 and the weight measurer 20. The measurement method for the photovoltaic module 3 includes, for example, loading the photovoltaic module 3 onto the measurement device 1 and measuring, with the measurement device 1, the output voltage value and the output current value as well as the weight value of the photovoltaic module 3. This allows, for example, the output characteristics and the weight of the photovoltaic module 3 as a measurement target to be measured under similar conditions. This can improve, for example, the measurement accuracy of the index value for the output characteristics of the photovoltaic module 3 such as the output power value per unit weight of the photovoltaic module 3.

### 2. Other Embodiments

The present disclosure is not limited to the above first embodiment and may be changed or varied variously without departing from the spirit and scope of the present disclosure.

### 2-1. Second Embodiment

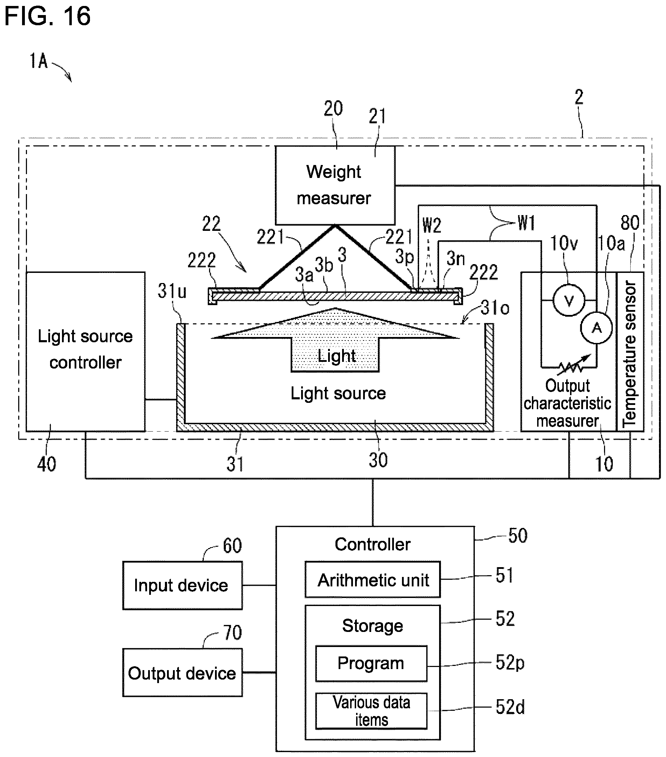

In the above first embodiment, the holder 22 may hold the photovoltaic module 3 by hanging the photovoltaic module 3 from above as illustrated in, for example, FIG. 16. In this case, the holding process in step S10a in FIG. 11 includes, for example, hanging the photovoltaic module 3 with the holder 22 from above. More specifically, the holder 22 may hold the photovoltaic module 3 by, for example, hanging the photovoltaic module 3 from above with the first surface 3a facing vertically downward. In this case, the holding process in step S10a in FIG. 11 includes, for example, hanging, with the holder 22, the photovoltaic module 3 from above with the first surface 3a facing vertically downward. In other words, the photovoltaic module 3 is, for example, hung from above by the holder 22 with the first surface 3a facing vertically downward. This allows, for example, the first surface 3a of the photovoltaic module 3 to be easily illuminated while being held stably. In this example, the predetermined placement conditions include the first surface 3a facing vertically downward at a predetermined position.

A measurement device 1A according to a second embodiment illustrated in FIG. 16 is based on, for example, the measurement device 1 according to the first embodiment, with the position and the structure of the weight measurer 20 begin varied.

The weight measurer 20 may include, for example, a digital hanging scale using a load cell. The weight measurer 20 includes, for example, a body 21 located above the light source 30 and a holder 22 hanging from the body 21. The body 21 includes, for example, a load cell that measures the weight value of the photovoltaic module 3 held by the holder 22. The holder 22 includes, for example, one or more holding sections 222 that hold the photovoltaic module 3 and one or more connectors 221 that connect the holding sections 222 to the body 21. The holding sections 222 may include members that can, for example, hold a portion of the outer peripheral surface (also referred to as an outer end face) of the photovoltaic module 3 connecting the first surface 3a and the second surface 3b by fitting, engaging, pinching, or fastening. The holding sections 222 can thus hold the photovoltaic module 3 without reducing, for example, the area of the first surface 3a of the photovoltaic module 3 used for photoelectric conversion (also referred to as an active area). The holding sections 222 may be made of, for example, any material including metal, resin, and ceramics. Each connector 221 may be, for example, a string-like member such as a wire or a wire rope.

In the example of FIG. 16, the holding sections 222 include, for example, two holding sections 222 that hold the photovoltaic module 3 extending substantially horizontally with the first surface 3a facing downward. The two holding sections 222 include, for example, a first holding section 222 that holds a first horizontal end of the photovoltaic module 3 and a second holding section 222 that holds a second horizontal end of the photovoltaic module 3 opposite the first horizontal end. The holder 22 can thus hold the photovoltaic module 3 by, for example, hanging the photovoltaic module 3 with the first surface 3a facing vertically downward.

The holding sections 222 may include, for example, second wiring W2 that can electrically connect the first wiring W1 to the first terminal 3p and the second terminal 3n of the photovoltaic module 3 held by the holder 22 under predetermined placement conditions. The holding sections 222 may be, for example, adjacent to or in contact with the first terminal 3p and the second terminal 3n when the holder 22 holds the photovoltaic module 3 under predetermined placement conditions. In this case, the second wiring W2 may be, for example, directly connected to the first terminal 3p and the second terminal 3n. The second wiring W2 may be connected to the first terminal 3p and the second terminal 3n in, for example, any of the manners including connector connection, pin-terminal connection, button connection, and slide-in connection. The holding sections 222 may be, for example, away from the first terminal 3p and the second terminal 3n when the holder 22 holds the photovoltaic module 3. In this case, the second wiring W2 may be electrically connected to the first terminal 3p and the second terminal 3n with fourth wiring W4. The fourth wiring W4 may be, for example, included in the second wiring W2 in the holder 22.

In this example, the photovoltaic module 3 held by the holder 22 under predetermined placement conditions may receive, for example, the weight of the holder 22. The weight measurer 20 may thus measure, for example, the weight value of the photovoltaic module 3 excluding the weight value of the holder 22. In other words, the weight measurer 20 may set a reference point (zero point) for the weight value adjusted by, for example, reflecting the weight value of the holder 22 (or perform offset adjustment). The weight value of the holder 22 may be, for example, preset or obtained through measurement with, for example, the weight measurer 20. The first obtainer 503 may obtain, from the weight measurer 20, the total value (total weight value) of the weight value of the photovoltaic module 3 and the weight values of the components other than the photovoltaic module 3 including the holder 22. In this case, the functional components implemented by the controller 50 may include the weight calculator 504 that calculates the weight value of the photovoltaic module 3 by subtracting the weight values of the components other than the photovoltaic module 3 including the holder 22 from the total weight value. The weight values of the components other than the photovoltaic module 3 may be, for example, preset or obtained through measurement with, for example, the weight measurer 20. The weight values of the components other than the photovoltaic module 3 may include, for example, the weight value of at least a part of the first wiring W1. The weight value of the components other than the photovoltaic module 3 may include, for example, the weight value of the fourth wiring W4.

### 2-2. Third Embodiment

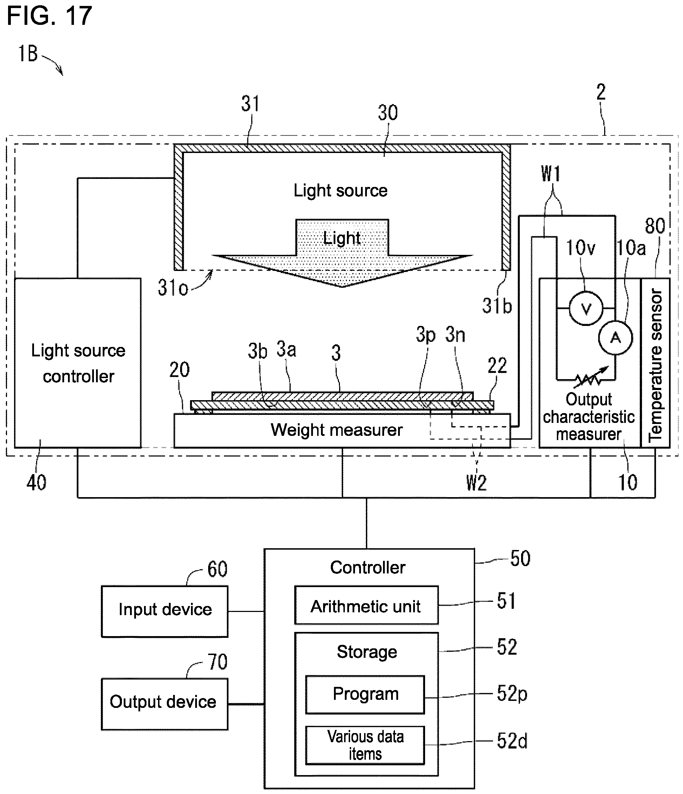

In the above first embodiment, the holder 22 may support the photovoltaic module 3 from below with the first surface 3a facing vertically upward as illustrated in, for example, FIG. 17. In this case, the holding process in step S 10a in FIG. 11 includes, for example, supporting, with the holder 22, the photovoltaic module 3 from below with the first surface 3a facing vertically upward. In other words, the photovoltaic module 3 is, for example, held by the holder 22 with the first surface 3a facing vertically upward. This allows, for example, the first surface 3a of the photovoltaic module 3 to be easily illuminated while being held stably. In this example, the predetermined placement conditions include the first surface 3a facing vertically upward at a predetermined position. The vertically upward direction herein refers to the direction opposite to the direction of gravity. The vertically upward direction (also referred to as an upward direction) may include, for example, a direction at an angle to the upward direction within a few degrees (also referred to as a substantially upward direction) and a direction at an angle to the upward direction within about 10 degrees.

A measurement device 1B according to a third embodiment illustrated in FIG. 17 is based on, for example, the measurement device 1 according to the first embodiment, with the position of the light source 30 and the structure of the weight measurer 20 being varied.

The light source 30 is located, for example, above the weight measurer 20. The housing 31 of the light source 30 includes, for example, an annular lower portion 31b defining the opening 31o that allows passage of light. This allows, for example, light traveling downward through the opening 31o from the light source 30 to be incident on the first surface 3a of the photovoltaic module 3 held by the holder 22 under predetermined placement conditions. The holder 22 in the weight measurer 20 may eliminate, for example, the through-hole 20t.

The weight measurer 20 may include, for example, second wiring W2 that can electrically connect the first wiring W1 to the first terminal 3p and the second terminal 3n of the photovoltaic module 3 held by the holder 22 under predetermined placement conditions. The weight measurement performed by the weight measurer 20 may thus be, for example, less likely to be affected by the weight of the first wiring W1, improving the accuracy of measuring the weight of the photovoltaic module 3. The structure also allows the output characteristics and the weight of the photovoltaic module 3 to be measured accurately under the same or similar placement conditions. The holder 22 may be, for example, adjacent to or in contact with the first terminal 3p and the second terminal 3n when holding the photovoltaic module 3 under predetermined placement conditions. In this case, the second wiring W2 may be, for example, directly connected to the first terminal 3p and the second terminal 3n. The second wiring W2 may be connected to the first terminal 3p and the second terminal 3n in, for example, any of the manners including connector connection, pin-terminal connection, button connection, and slide-in connection. The holder 22 may be away from the first terminal 3p and the second terminal 3n when holding the photovoltaic module 3. In this case, the second wiring W2 may be electrically connected to the first terminal 3p and the second terminal 3n with fourth wiring W4. The fourth wiring W4 may be, for example, included in the second wiring W2 in the holder 22. 2-3. Fourth Embodiment

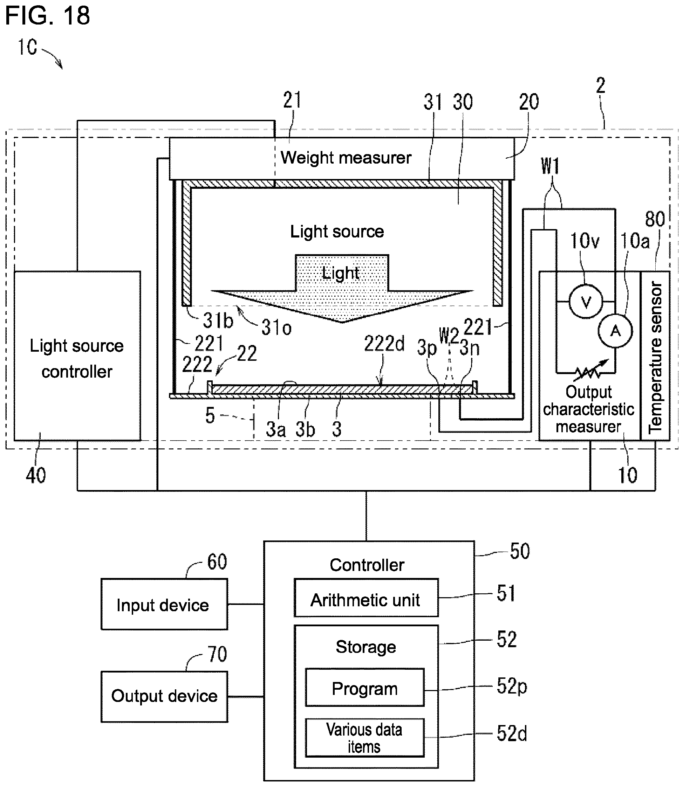

In the above third embodiment, the holder 22 may hold the photovoltaic module 3 by hanging the photovoltaic module 3 from above as illustrated in, for example, FIG. 18. In this case, the holding process in step S10a in FIG. 11 includes, for example, hanging the photovoltaic module 3 with the holder 22 from above. More specifically, the holder 22 may hold the photovoltaic module 3 by, for example, hanging the photovoltaic module 3 from above with the first surface 3a facing vertically upward. In this case, the holding process in step S10a in FIG. 11 includes, for example, hanging, with the holder 22, the photovoltaic module 3 from above with the first surface 3a facing vertically upward. In other words, the photovoltaic module 3 is, for example, hung from above by the holder 22 with the first surface 3a facing vertically upward. This allows, for example, the first surface 3a of the photovoltaic module 3 to be easily illuminated while being held. In this example, the predetermined placement conditions include the first surface 3a facing vertically upward at a predetermined position.

A measurement device 1C according to a fourth embodiment illustrated in FIG. 18 is based on, for example, the measurement device 1B according to the third embodiment, with the position and the structure of the weight measurer 20 being varied.

The weight measurer 20 may include, for example, a digital hanging scale using a load cell. The weight measurer 20 includes, for example, a body 21 located above the light source 30 and a holder 22 hanging from the body 21. The body 21 includes, for example, a load cell that measures the weight value of the photovoltaic module 3 held by the holder 22. The holder 22 includes, for example, a holding section 222 that holds the photovoltaic module 3 and two or more connectors 221 that connect the holding section 222 to the body 21. The holding section 222 includes, for example, a member that can at least support the second surface 3b of the photovoltaic module 3 from below. The holding section 222 may include, for example, a recess 222d to receive the photovoltaic module 3. The photovoltaic module 3 can thus be, for example, held stably. Each connector 221 may be, for example, a string-like member such as a wire or a wire rope. The two or more connectors 221 are located, for example, horizontally off the optical path extending from the light source 30 to the first surface 3a. More specifically, the two or more connectors 221 are located, for example, across the optical path extending from the light source 30 to the first surface 3a. The holder 22 can thus hold the photovoltaic module 3 by, for example, hanging the photovoltaic module 3 with the first surface 3a facing vertically upward.

The holding section 222 may include, for example, second wiring W2 that can electrically connect the first wiring W1 to the first terminal 3p and the second terminal 3n of the photovoltaic module 3 held by the holder 22 in predetermined placement conditions. The holding sections 222 may be, for example, adjacent to or in contact with the first terminal 3p and the second terminal 3n when the holder 22 holds the photovoltaic module 3 under predetermined placement conditions. In this case, the second wiring W2 may be, for example, directly connected to the first terminal 3p and the second terminal 3n. The second wiring W2 may be connected to the first terminal 3p and the second terminal 3n in, for example, any of the manners including connector connection, pin-terminal connection, button connection, and slide-in connection. The holding section 222 may be, for example, away from the first terminal 3p and the second terminal 3n when the holder 22 holds the photovoltaic module 3. In this case, the second wiring W2 may be electrically connected to the first terminal 3p and the second terminal 3n with fourth wiring W4. The fourth wiring W4 may be, for example, included in the second wiring W2 in the holder 22.

In this example, the photovoltaic module 3 held by the holder 22 under predetermined placement conditions may receive, for example, the weight of the holder 22. The weight measurer 20 may thus measure, for example, the weight value of the photovoltaic module 3 excluding the weight value of the holder 22. In other words, the weight measurer 20 may set a reference point (zero point) for the weight value adjusted by, for example, reflecting the weight value of the holder 22 (or perform offset adjustment). The weight value of the holder 22 may be, for example, preset or obtained through measurement with, for example, the weight measurer 20. The first obtainer 503 may obtain, from the weight measurer 20, the total value (total weight value) of the weight value of the photovoltaic module 3 and the weight values of the components other than the photovoltaic module 3 including the holder 22. In this case, the functional components implemented by the controller 50 may include the weight calculator 504 that calculates the weight value of the photovoltaic module 3 by subtracting the weight values of the components other than the photovoltaic module 3 including the holder 22 from the total weight value. The weight values of the components other than the photovoltaic module 3 may be, for example, preset or obtained through measurement with, for example, the weight measurer 20. The weight values of the components other than the photovoltaic module 3 may include, for example, the weight value of at least a part of the first wiring W1. The weight value of the components other than the photovoltaic module 3 may include, for example, the weight value of the fourth wiring W4.

### 2-4. Fifth Embodiment

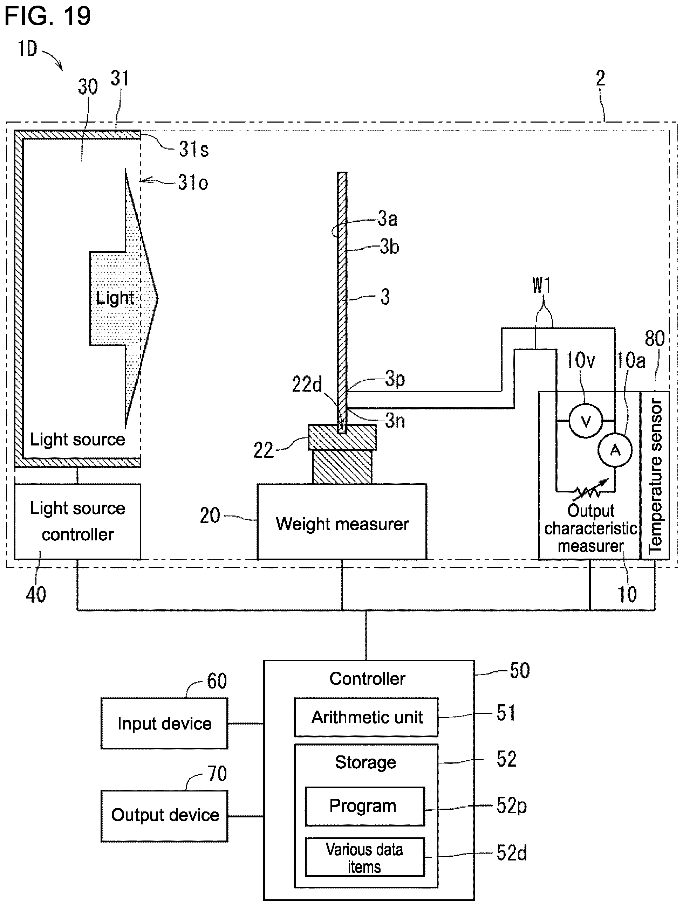

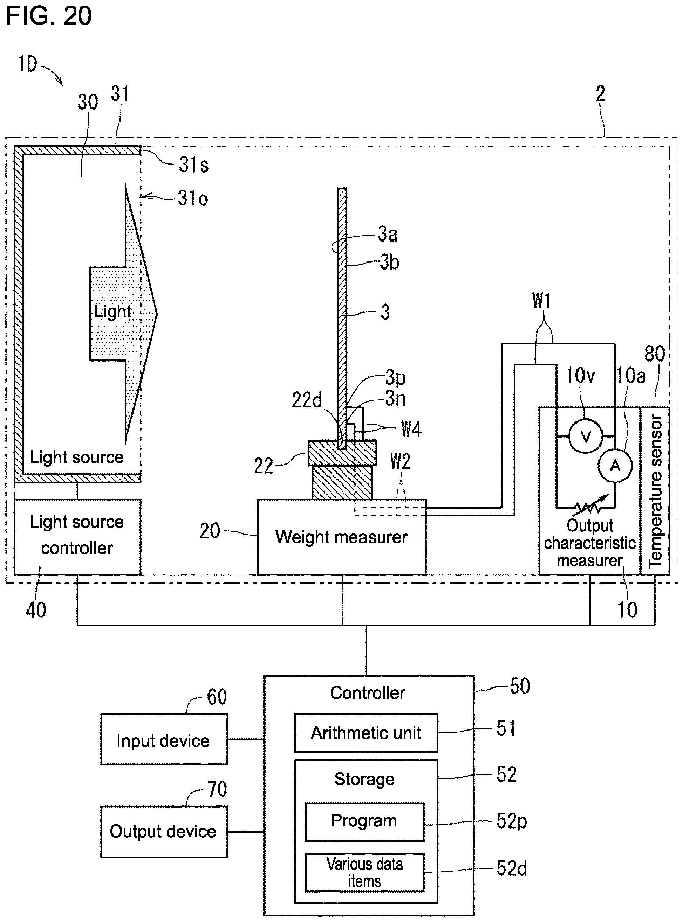

In the above third embodiment, the holder 22 may support the photovoltaic module 3 from below with the first surface 3a facing in a horizontal direction, as illustrated in, for example, FIGs. 19 and 20. In this case, the holding process in step S 10a in FIG. 11 includes, for example, supporting, with the holder 22, the photovoltaic module 3 from below with the first surface 3a facing in the horizontal direction. In other words, the photovoltaic module 3 is, for example, supported by the holder 22 from below with the first surface 3a facing in the horizontal direction. This allows, for example, the first surface 3a of the photovoltaic module 3 to be easily illuminated while being held. In this example, the predetermined placement conditions include the first surface 3a facing in the horizontal direction at a predetermined position. The horizontal direction may herein refer to, for example, the direction orthogonal to the direction of gravity, the direction along the surface of the ground, the ground, or the surface of a floor (also referred to as a substantially horizontal direction), or the direction orthogonal to the vertical direction. The horizontal direction may include, for example, a direction at an angle to the horizontal direction within a few degrees (also referred to as a substantially horizontal direction) and a direction at an angle to the horizontal direction within about 10 degrees.

A measurement device 1D according to a fifth embodiment illustrated in FIGs. 19 and 20 is based on, for example, the measurement device 1B according to the third embodiment, with the structure of the weight measurer 20 and the position and the structure of the light source 30 being varied.

The holder 22 in the weight measurer 20 can support the photovoltaic module 3 from below to allow, for example, the first surface 3a to face the light source 30 in the horizontal direction. The holder 22 may include, for example, a recess 22d to receive one end of the photovoltaic module 3. The recess 22d may allow, for example, the photovoltaic module 3 to maintain its orientation under predetermined placement conditions. In this case, the holding process in FIG. 11 includes, for example, holding, with the holder 22, the photovoltaic module to maintain the orientation of the photovoltaic module 3 under predetermined placement conditions. The holder 22 can thus hold, for example, the photovoltaic module 3 stably with the recess 22d.

The light source 30 is, for example, located lateral to the weight measurer 20. The housing 31 of the light source 30 includes, for example, an annular side portion 31s that defines an opening 31o that allows passage of light. This allows, for example, light traveling laterally through the opening 31o from the light source 30 to be incident on the first surface 3a of the photovoltaic module 3 held by the holder 22 under predetermined placement conditions.

In the example of FIG. 19, as in the example of FIG. 1, the first wiring W1 is directly connected to the first terminal 3p and the second terminal 3n of the photovoltaic module 3 held by the holder 22 under predetermined placement conditions. In this case, the photovoltaic module 3 held by the holder 22 under predetermined placement conditions may receive, for example, the weight of at least a part of the first wiring W1. The weight measurer 20 may thus measure, for example, the weight value of the photovoltaic module 3 excluding the weight value of at least the part of the first wiring W1. In other words, the weight measurer 20 may set a reference point (zero point) for the weight value adjusted by, for example, reflecting the weight value of at least the part of the first wiring W1 (or perform offset adjustment). The weight value of at least the part of the first wiring W1 may be, for example, preset or obtained through measurement with, for example, the weight measurer 20. The first obtainer 503 may obtain, from the weight measurer 20, the total value (total weight value) of the weight value of the photovoltaic module 3 and the weight values of the components other than the photovoltaic module 3 including at least the part of the first wiring W1. In this case, the functional components implemented by the controller 50 may include, for example, the weight calculator 504 that calculates the weight value of the photovoltaic module 3 by subtracting the weight values of the components other than the photovoltaic module 3 including at least the part of the first wiring W1 from the total weight value. The weight values of the components other than the photovoltaic module 3 may be, for example, preset or obtained through measurement with, for example, the weight measurer 20.

As illustrated in, for example, FIG. 20, the weight measurer 20 may include second wiring W2 that can electrically connect the first wiring W1 to the first terminal 3p and the second terminal 3n of the photovoltaic module 3 held by the holder 22 under predetermined placement conditions. The weight measurement performed by the weight measurer 20 may thus be, for example, less likely to be affected by the weight of the first wiring W1, improving the accuracy of measuring the weight of the photovoltaic module 3. The structure also allows the output characteristics and the weight of the photovoltaic module 3 to be measured accurately under the same or similar placement conditions. The holder 22 may be, for example, adjacent to or in connect with the first terminal 3p and the second terminal 3n when holding the photovoltaic module 3 under predetermined placement conditions. In this case, the second wiring W2 may be directly connected to the first terminal 3p and the second terminal 3n. The second wiring W2 may be connected to the first terminal 3p and the second terminal 3n in, for example, any of the manners including connector connection, pin-terminal connection, button connection, and slide-in connection. The holder 22 may be away from the first terminal 3p and the second terminal 3n when holding the photovoltaic module 3. In this case, the second wiring W2 may be electrically connected to the first terminal 3p and the second terminal 3n with fourth wiring W4. The fourth wiring W4 may be, for example, included in the second wiring W2 in the holder 22.

In this example, the photovoltaic module 3 held by the holder 22 under predetermined placement conditions may be receive, for example, the weight of the fourth wiring W4. The weight measurer 20 may thus measure, for example, the weight value of the photovoltaic module 3 excluding the weight value of the fourth wiring W4. In other words, the weight measurer 20 may set a reference point (zero point) for the weight value adjusted by, for example, reflecting the weight value of the fourth wiring W4 (or perform offset adjustment). The weight value of the fourth wiring W4 may be, for example, preset or obtained through measurement with, for example, the weight measurer 20.

In this example, the first obtainer 503 may obtain, from the weight measurer 20, the total value (total weight value) of the weight value of the photovoltaic module 3 and the weight values of the components other than the photovoltaic module 3 such as the fourth wiring W4. In this case, the functional components implemented by the controller 50 may include, for example, the weight calculator 504 that calculates the weight value of the photovoltaic module 3 by subtracting the weight values of the components other than the photovoltaic module 3 including the fourth wiring W4 from the total weight value. The weight values of the components other than the photovoltaic module 3 including the fourth wiring W4 may be, for example, preset or obtained through measurement with, for example, the weight measurer 20. 2-5. Sixth Embodiment

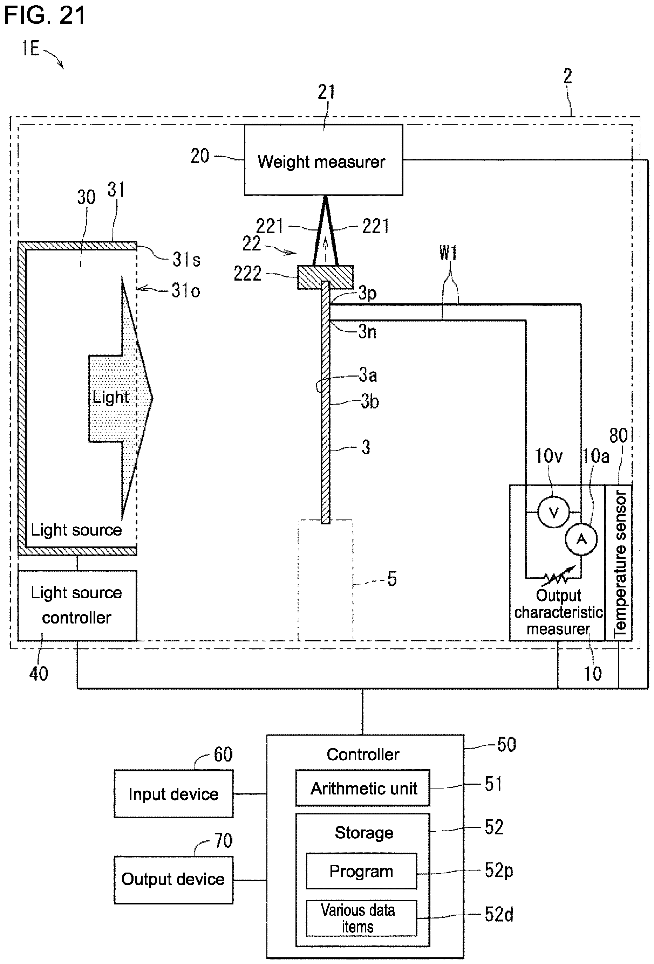

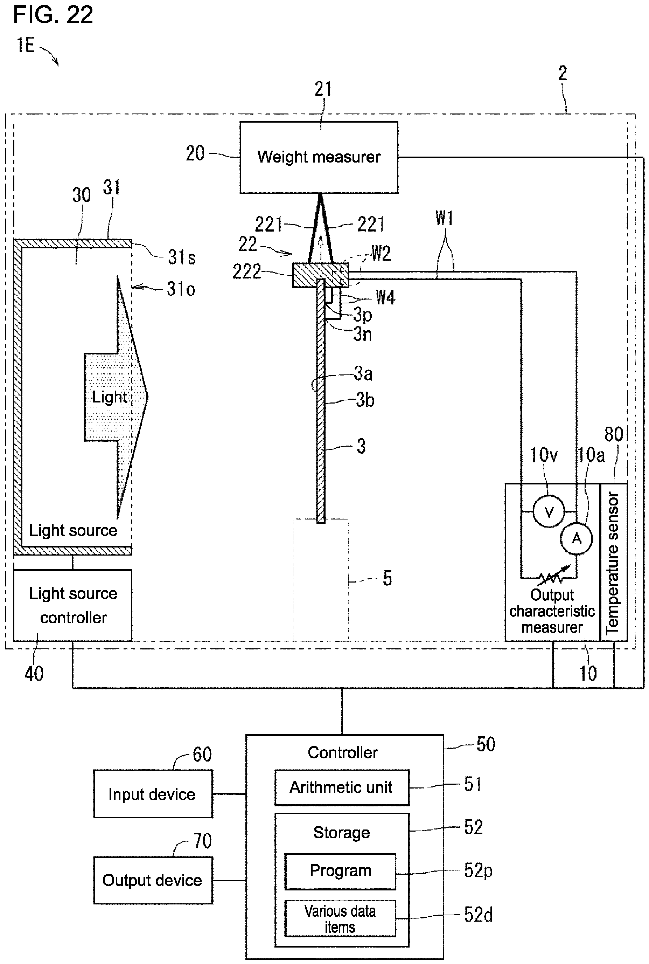

In the above fifth embodiment, the holder 22 may hold the photovoltaic module 3 by hanging the photovoltaic module 3 from above as illustrated in, for example, FIGs. 21 and 22. In this case, the holding process in step S 10a in FIG. 11 includes, for example, hanging the photovoltaic module 3 with the holder 22 from above. More specifically, the holder 22 may hold the photovoltaic module 3 from above by, for example, hanging the photovoltaic module 3 with the first surface 3a facing in the horizontal direction. In this case, the holding process in step S10a in FIG. 11 includes, for example, hanging, with the holder 22, the photovoltaic module 3 from above with the first surface 3a facing in the horizontal direction. In other words, the photovoltaic module 3 is, for example, hung by the holder 22 from above with the first surface 3a facing in the horizontal direction. This allows, for example, the first surface 3a of the photovoltaic module 3 to be easily illuminated while being held. In this example, the predetermined placement conditions include the first surface 3a facing in the horizontal direction at a predetermined position.

A measurement device 1E according to a sixth embodiment illustrated in FIGs. 21 and 22 is based on, for example, the measurement device 1D according to the fifth embodiment, with the position and the structure of the weight measurer 20 being varied.

The weight measurer 20 may include, for example, a digital hanging scale using a load cell. The weight measurer 20 includes, for example, a body 21 located above the lateral area of the light source 30 and a holder 22 hanging from the body 21. The body 21 includes, for example, a load cell that measures the weight value of the photovoltaic module 3 held by the holder 22. The holder 22 includes, for example, a holding section 222 that holds the photovoltaic module 3 and connectors 221 that connect the holding section 222 to the body 21. The holding section 222 is, for example, a member that can hold the photovoltaic module 3 with the first surface 3a facing in the horizontal direction. The holding section 222 can hold, for example, the upper end of the photovoltaic module 3 with the first surface 3a facing in the horizontal direction by fitting, engaging, pinching, or fastening. Each connector 221 may be, for example, a string-like member such as a wire or a wire rope. The holding section 222 is, for example, hung from the body 21 with the connectors 221. The holder 22 may include, for example, one connector 221 or two or more connectors 221.

In the example of FIG. 21, as in the example of FIG. 19, the first wiring W1 is directly connected to the first terminal 3p and the second terminal 3n of the photovoltaic module 3 held by the holder 22 under predetermined placement conditions. In this case, the photovoltaic module 3 held by the holder 22 under predetermined placement conditions may receive, for example, the weight of at least a part of the first wiring W1. The weight measurer 20 may thus measure, for example, the weight value of the photovoltaic module 3 excluding the weight value of at least the part of the first wiring W1. In other words, the weight measurer 20 may set a reference point (zero point) for the weight value adjusted by, for example, reflecting the weight value of at least the part of the first wiring W1 (or perform offset adjustment). The weight value of at least the part of the first wiring W1 may be, for example, preset or obtained through measurement with, for example, the weight measurer 20. The first obtainer 503 may obtain, from the weight measurer 20, the total value (total weight value) of the weight value of the photovoltaic module 3 and the weight values of the components other than the photovoltaic module 3 including at least the part of the first wiring W1. In this case, the functional components implemented by the controller 50 may include, for example, the weight calculator 504 that calculates the weight value of the photovoltaic module 3 by subtracting the weight values of the components other than the photovoltaic module 3 including at least the part of the first wiring W1 from the total weight value. The weight values of the components other than the photovoltaic module 3 may be, for example, preset or obtained through measurement with, for example, the weight measurer 20.

As illustrated in, for example, FIG. 22, the holding section 222 may include second wiring W2 that can electrically connect the first wiring W1 to the first terminal 3p and the second terminal 3n of the photovoltaic module 3 held by the holder 22 under predetermined placement conditions. The holding section 222 may be adjacent to or in contact with the first terminal 3p and the second terminal 3n when the holder 22 holds the photovoltaic module 3 under predetermined placement conditions. In this case, the second wiring W2 may be, for example, directly connected to the first terminal 3p and the second terminal 3n. The second wiring W2 may be connected to the first terminal 3p and the second terminal 3n in, for example, any of the manners including connector connection, pin-terminal connection, button connection, and slide-in connection. The holding section 222 may be, for example, away from the first terminal 3p and the second terminal 3n when the holder 22 holds the photovoltaic module 3. In this case, the second wiring W2 may be electrically connected to the first terminal 3p and the second terminal 3n with fourth wiring W4. The fourth wiring W4 may be, for example, included in the second wiring W2 in the holder 22.

In this example, the photovoltaic module 3 held by the holder 22 under predetermined placement conditions may receive, for example, the weight of the holder 22. The weight measurer 20 may thus measure, for example, the weight value of the photovoltaic module 3 excluding the weight value of the holder 22. In other words, the weight measurer 20 may perform, for example, offset adjustment to set a reference point (zero point) for the weight value by reflecting the weight value of the holder 22. The weight value of the holder 22 may be, for example, preset or obtained through measurement with, for example, the weight measurer 20. The first obtainer 503 may obtain, from the weight measurer 20, the total value (total weight value) of the weight value of the photovoltaic module 3 and the weight values of the components other than the photovoltaic module 3 including the holder 22. In this case, the functional components implemented by the controller 50 may include the weight calculator 504 that calculates the weight value of the photovoltaic module 3 by subtracting the weight values of the components other than the photovoltaic module 3 including the holder 22 from the total weight value. The weight values of the components other than the photovoltaic module 3 may be, for example, preset or obtained through measurement with, for example, the weight measurer 20. The weight values of the components other than the photovoltaic module 3 may include, for example, the weight value of at least a part of the first wiring W1. The weight value of the components other than the photovoltaic module 3 may include, for example, the weight value of the fourth wiring W4.

### 2-6. Seventh Embodiment

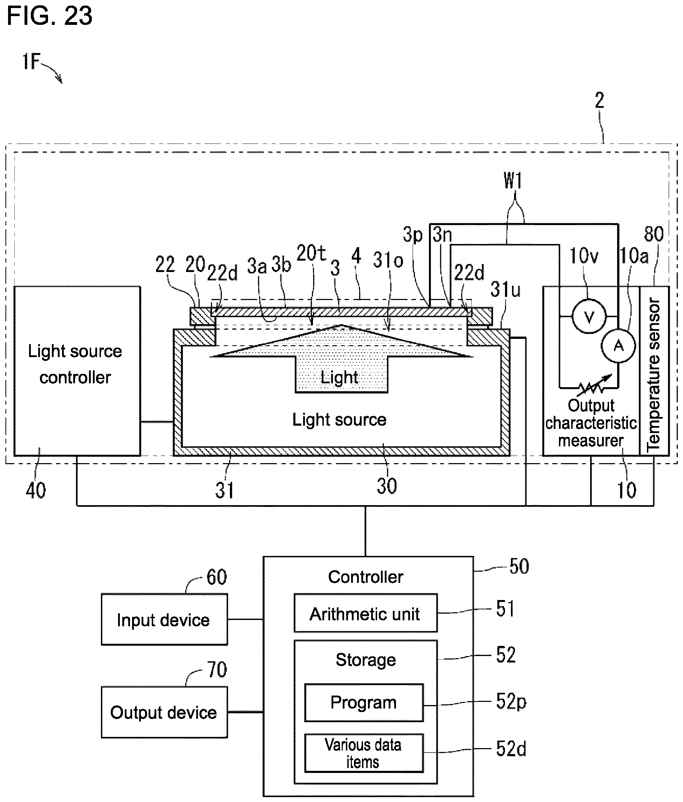

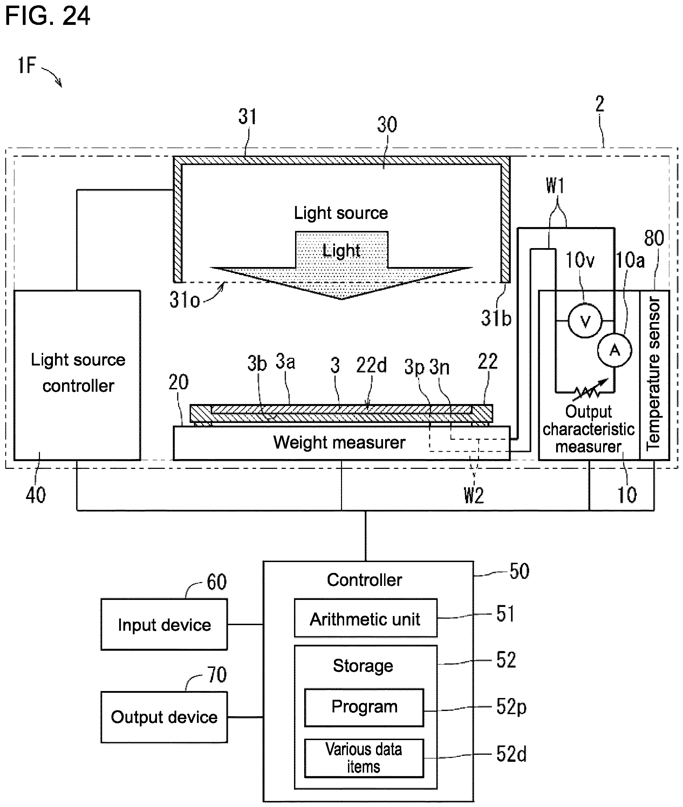

In the above first and third embodiments, the holder 22 may include a recess 22d (also referred to as a holding structure) to hold the photovoltaic module 3 in an orientation under predetermined placement conditions, as illustrated in, for example, FIGs. 23 and 24. In this case, the holding process in step S10a in FIG. 11 includes, for example, holding, with the holder 22, the photovoltaic module to maintain the orientation of the photovoltaic module under predetermined placement conditions. This allows, for example, the output characteristics and the weight of the photovoltaic module 3 to be measured accurately under the same or similar placement conditions, with the photovoltaic module 3 being held stably under predetermined placement conditions.

A measurement device 1F with a first structure according to a seventh embodiment illustrated in FIG. 23 is based on, for example, the measurement device 1 according to the first embodiment, with the holder 22 being varied to include the recess 22d. In the example of FIG. 23, the recess 22d is located on, for example, the upper surface of the holder 22 to receive the photovoltaic module 3. The holder 22 can thus support, from below, the photovoltaic module 3 received in the recess 22d with the first surface 3a facing vertically downward. In place of the recess 22d, the holder 22 may include two or more protrusions at the top of the holder 22 as the holding structure. The two or more protrusions may laterally hold the photovoltaic module 3 placed on the holder 22 between the protrusions.

A measurement device 1F with a second structure according to the seventh embodiment illustrated in FIG. 24 is based on, for example, the measurement device 1B according to the third embodiment, with the holder 22 being varied to include the recess 22d. In the example of FIG. 24, the recess 22d is located on, for example, the upper surface of the holder 22 to receive the photovoltaic module 3. The holder 22 can thus support, from below, the photovoltaic module 3 received in the recess 22d with the first surface 3a facing vertically upward. In place of the recess 22d, the holder 22 may include, for example, two or more protrusions located at the top of the holder 22 as the holding structure. The two or more protrusions may laterally hold the photovoltaic module 3 placed on the holder 22 between the protrusions.

### 2-7. Eighth Embodiment

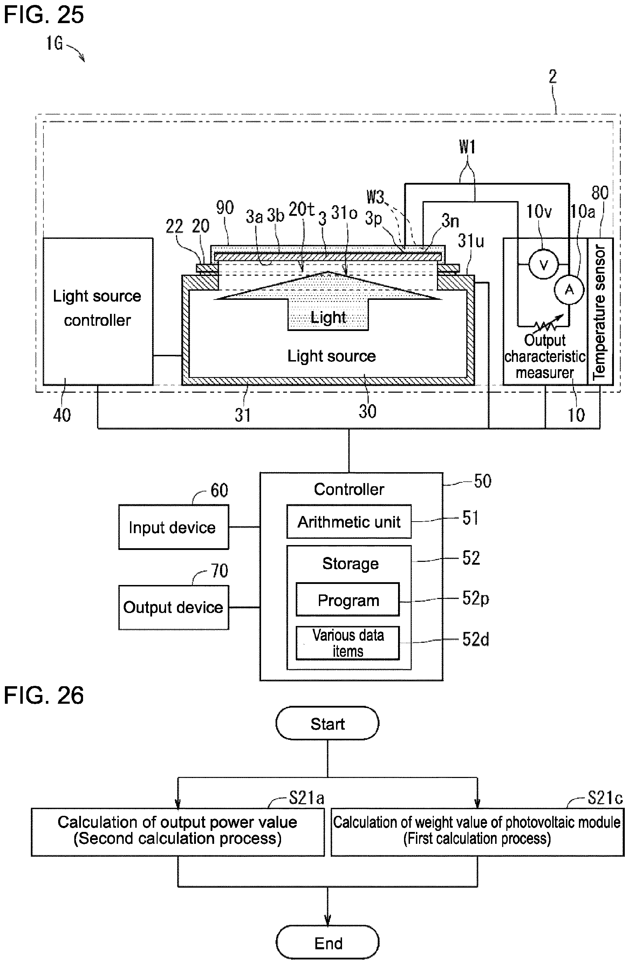

In each of the above first to sixth embodiments, the holder 22 may hold the photovoltaic module 3 under predetermined placement conditions using a fixture 90 as illustrated in, for example, FIG. 25 and FIGs. 34 to 39. In this case, the holding process in step S10a in FIG. 11 includes, for example, holding, with the holder 22, the photovoltaic module 3 under predetermined placement conditions using the fixture 90. This structure allows, for example, the holder 22 to hold the photovoltaic module 3 under predetermined placement conditions more stably in accordance with the shape of the photovoltaic module 3. For example, a flexible photovoltaic module 3 may be held stably in an intended shape using the fixture 90. The fixture 90 may be made of, for example, any material including metal, resin, and ceramics.

A measurement device 1G with an example structure (also referred to as a 1A-example structure) according to an eighth embodiment illustrated in FIG. 25 is based on, for example, the structure of the measurement device 1 according to the first embodiment illustrated in FIG. 1, with the holder 22 being varied to hold the photovoltaic module 3 using the fixture 90 under predetermined placement conditions. The fixture 90 is, for example, a member that can hold the outer end face of the photovoltaic module 3 by fitting, engaging, pinching, or fastening. More specifically, the fixture 90 is, for example, an annular frame attached to the outer end face of the photovoltaic module 3. The fixture 90 has, for example, a shape that avoids covering the area (active area) on the first surface 3a of the photovoltaic module 3 used for photoelectric conversion when being attached to the outer end face of the photovoltaic module 3. The fixture 90 may be, for example, an annular frame having a groove portion on its inner surface to fit or engage with the photovoltaic module 3. For example, the groove portion may be made of a heat insulating material. In this case, the temperature of the photovoltaic module 3 may be constant during the output measurement performed on the photovoltaic module 3. This may thus improve, for example, the accuracy of measuring the output characteristics of the photovoltaic module 3 with the measurement device 1. The fixture 90 may include, for example, a portion located on the second surface 3b of the photovoltaic module 3 when being attached to the outer end face of the photovoltaic module 3.

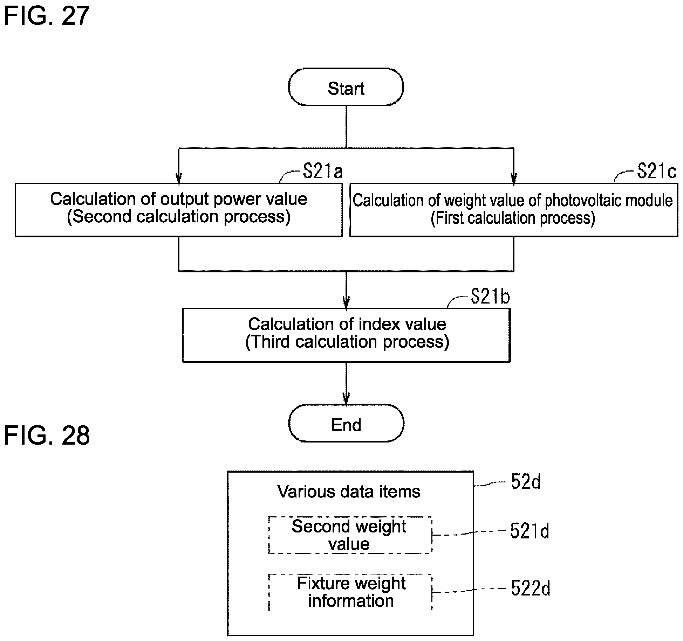

In the eighth embodiment, the weight measurer 20 measures, for example, the weight values (also referred to as a first weight value) of the photovoltaic module 3 and the fixture 90. In other words, the first obtainer 503 obtains, for example, the first weight value including the weight values of the photovoltaic module 3 and the fixture 90 measured by the weight measurer 20. The functional components implemented by the controller 50 may thus include, for example, the weight calculator (also referred to as the first calculator) 504 that calculates the weight value of the photovoltaic module 3 by subtracting the weight value (also referred to as a second weight value) of the fixture 90 from the first weight value. In this case, the first measurement process in step S20 in FIG. 10 includes, for example, measuring, with the weight measurer 20, the first weight including the weight values of the fixture 90 and the photovoltaic module 3 held by the holder 22 using the fixture 90 under predetermined placement conditions. The calculation process in step S21 in FIG. 13 may include, for example, a process in step S21c (also referred to as a first calculation process) as illustrated in FIGs. 26 and 27. In other words, the measurement method for the photovoltaic module 3 may include, for example, the loading process in step S10, the first measurement process in step S20, and the first calculation process in step S21c. In the first calculation process, the weight calculator 504 subtracts the second weight value being the weight value of the fixture 90 from the first weight value obtained in the first measurement process in step S20 to calculate the weight value of the photovoltaic module 3. The output characteristics and the weight of the photovoltaic module 3 can thus be, for example, measured on the photovoltaic module 3 as a measurement target being held stably under predetermined placement conditions using the fixture 90. The first weight value may include the weight values of other components different from the photovoltaic module 3 and the fixture 90, such as the first wiring W1. In this case, the second weight value may include, for example, the weight values of other components such as the first wiring W1 in addition to the weight value of the fixture 90.

The output process in step S30 illustrated in FIG. 13 may include, for example, outputting, with the output device 70, information indicating the weight value of the photovoltaic module 3 calculated in the first calculation process in step S21c. This allows, for example, the user of the measurement device 1 to easily learn the weight value of the photovoltaic module 3.

In the example described below, the calculation process in step S21 includes the second calculation process in step S21a and the first calculation process in step S21c as illustrated in FIG. 26. In this case, the output process in step S30 illustrated in FIG. 13 may include, for example, outputting, with the output device 70, information indicating the output power value calculated in the second calculation process in step S21a and information indicating the weight value of the photovoltaic module 3 calculated in the first calculation process in step S21c. This allows, for example, the user of the measurement device 1 to easily learn the weight value and the output power value of the photovoltaic module 3.

In the example described below, the calculation process in step S21 includes the second calculation process in step S21a, the first calculation process in step S21c, and the third calculation process in step S21b as illustrated in FIG. 27. In this case, the third calculation process in step S21b in FIG. 27 may include, for example, performing, with the index calculator 507, the predetermined arithmetic operation including dividing the output power value calculated in the second calculation process in step S21a by the weight value of the photovoltaic module 3 calculated in the first calculation process in step S21c. The output process in step S30 illustrated in FIG. 13 may then include, for example, outputting, with the output device 70, information indicating the index value calculated in the third calculation process in step S21b.

As illustrated in, for example, FIG. 28, the storage 52 may store information 521d indicating the second weight value being the weight value of the fixture 90. In this case, the weight calculator 504 can calculate the weight value of the photovoltaic module 3 by, for example, obtaining the information 521d indicating the second weight value from the storage 52 and subtracting the second weight value from the first weight value. The weight value of the photovoltaic module 3 can thus be, for example, calculated easily. The information 521d indicating the second weight value may be stored into the storage 52 with a function of the controller 50 in response to, for example, a user operation on the input device 60, or input into the storage 52 from an external device through a portable storage medium or a communication line. The information 521d indicating the second weight value measured by the weight measurer 20 may be, for example, stored into the storage 52 with a function of the controller 50.

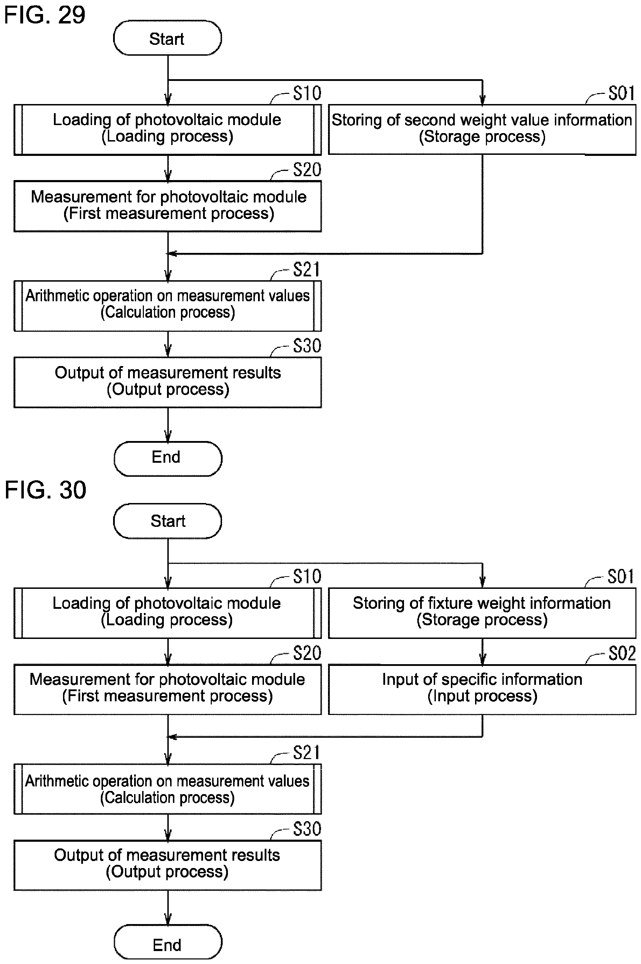

The measurement method for the photovoltaic module 3 may include, for example, a process (storage process) S01 as illustrated in FIG. 29. The measurement method for the photovoltaic module 3 illustrated in FIG. 29 includes the storage process in step S01 in addition to the processes in the measurement method for the photovoltaic module 3 illustrated in FIG. 13. In the storage process, information indicating the second weight value being the weight value of the fixture 90 is, for example, stored into the storage 52. The storage process is performed, for example, before the first calculation process in step S21c included in the calculation process in step S21. The first calculation process in step S21c in FIG. 26 or FIG. 27 may thus include calculating, with the weight calculator 504, the weight value of the photovoltaic module 3 by, for example, subtracting, from the first weight value obtained in the first measurement process in step S20, the second weight value obtained from the storage 52. This allows, for example, the weight value of the photovoltaic module 3 to be easily calculated.

Various fixtures 90 may be used in accordance with, for example, the shape of the photovoltaic module 3 as a measurement target. In this case, as illustrated in FIG. 28, the storage 52 may store, for example, information (also referred to as fixture weight information) 522d that includes multiple pieces of information specifying the types of fixtures 90 (also referred to as specific information) associated with pieces of information indicating the weight values of the fixtures 90 (second weight values). The specific information may be, for example, identification information such as the model number of the fixture 90. The fixture weight information 522d may be stored as, for example, a table including multiple pieces of specific information associated with the respective pieces of weight value information. The fixture weight information 522d may be, for example, created by a function of the controller 50 storing, in response user operations performed on the input device 60, pieces of specific information associated with weight values into the storage 52. The fixture weight information 522d may be, for example, obtained from an external device through a portable storage medium or a communication line with a function of the controller 50 and stored into the storage 52. The fixture weight information 522d may be, for example, created with a function of the controller 50 storing, into the storage 52, the second weight value for each fixture 90 measured by, for example, the weight measurer 20. In the example described below, the storage 52 stores the fixture weight information 522d, and the input device 60 can receive an input of a piece of specific information specifying the type of the fixture 90 in response to, for example, a user operation. In this case, the first obtainer 503 as a functional component implement by the controller 50 may obtain, based on the piece of specific information received by the input device 60 and the fixture weight information 522d stored in the storage 52, information indicating the second weight value being the weight value of the fixture 90. In this case, the weight calculator (first calculator) 504 can calculate, for example, the weight value of the photovoltaic module 3 based on the first weight value and the second weight value obtained by the first obtainer 503. This allows, for example, the weight value of the photovoltaic module 3 to be easily calculated although any fixture 90 corresponding the shape of the photovoltaic module 3 is used.

The measurement method for the photovoltaic module 3 may include, for example, the storage process in step S01 and a process (also referred to as an input process) S02 as illustrated in FIG. 30. The measurement method for the photovoltaic module 3 illustrated in FIG. 30 includes the storage process in step S01 and the input process S02 in addition to the processes in the measurement method for the photovoltaic module 3 illustrated in FIG. 13. The storage process in step S01 includes, for example, storing, into the storage 52, the fixture weight information 522d including pieces of specific information specifying the types of fixtures 90 associated with pieces of weight value information. The input process in step S02 includes, for example, receiving, with the input device 60, an input of a piece of specific information specifying the type of the fixture 90. The storage process and the input process are performed, for example, in this order before the first calculation process in step S21c included in the calculation process in step S21. In the first calculation process in step S21c in FIG. 26 or FIG. 27, the first obtainer 503 may then obtain, for example, information indicating the second weight value being the weight value of the fixture 90 based on the piece of specific information received with the input device 60 in the input process in step S02 and the fixture weight information 522d stored into the storage 52 in the storage process in step S0 1. In this case, in the first calculation process in step S21c, the weight calculator 504 calculates the weight value of the photovoltaic module 3 by, for example, subtracting the second weight value obtained by the first obtainer 503 from the first weight value obtained in the first measurement process in step S20. This allows, for example, the weight value of the photovoltaic module 3 to be easily calculated although any fixture 90 corresponding the shape of the photovoltaic module 3 is used.

Before or after the output measurement and the weight measurement performed on the photovoltaic module 3 as a measurement target, the weight measurer 20 may be used to, for example, measure the weight of the fixture 90 to obtain information indicating the second weight value. In the weight measurement performed on the photovoltaic module 3 as a measurement target, the weight measurer 20 measures, for example, the first weight value including the weight values of the fixture 90 and the photovoltaic module 3 held by the holder 22 under predetermined placement conditions using the fixture 90. Before or after the output measurement and the weight measurement performed on the photovoltaic module 3 as a measurement target, the weight measurer 20 may, for example, measure the second weight value being the weight value of the fixture 90 held by the holder 22. This allows, for example, the weight value of the photovoltaic module 3 to be easily calculated although any fixture 90 corresponding the shape of the photovoltaic module 3 is used.

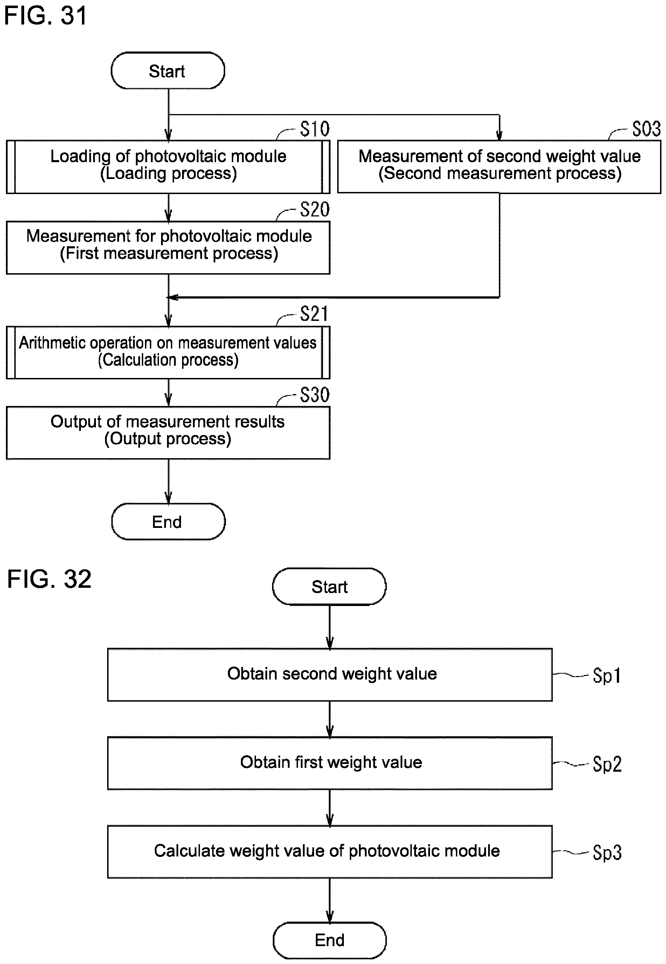

As illustrated in, for example, FIG. 31, the measurement method for the photovoltaic module 3 may include a process in step S03 (also referred to as a second measurement process). The measurement method for the photovoltaic module 3 illustrated in FIG. 31 includes the second measurement process in step S03 in addition to the processes in the measurement method for the photovoltaic module 3 illustrated in FIG. 13. The second measurement process in step S03 includes, for example, before the loading process in step S10 or after the first measurement process in step S20, holding the fixture 90 with the holder 22 and measuring, with the weight measurer 20, the second weight value being the weight value of the fixture 90 held by the holder 22. The second measurement process is performed, for example, before the first calculation process in step S21c included in the calculation process in step S21. The first calculation process in step S21c in FIG. 26 or FIG. 27 then includes, for example, calculating, with the weight calculator 504, the weight value of the photovoltaic module 3 by, for example, subtracting the second weight value obtained in the second measurement process in step S03 from the first weight value obtained in the first measurement process in step S20.

As illustrated in FIG. 32, the controller 50 may perform, for example, the processes in step Sp1, step Sp2, and step Sp3 in this order. In step Sp1, the first obtainer 503 obtains, for example, information indicating the second weight value being the weight value of the fixture 90 held by the holder 22 measured by the weight measurer 20. In step Sp2, the first obtainer 503 obtains, for example, information indicating the first weight value including the weight values of the photovoltaic module 3 and the fixture 90 measured by the weight measurer 20 with the photovoltaic module 3 being held by the holder 22 under predetermined placement conditions using the fixture 90. In step Sp3, the weight calculator 504 calculates, for example, the weight value of the photovoltaic module 3 by subtracting the second weight value obtained in step Sp1 from the first weight value obtained in step Sp2.

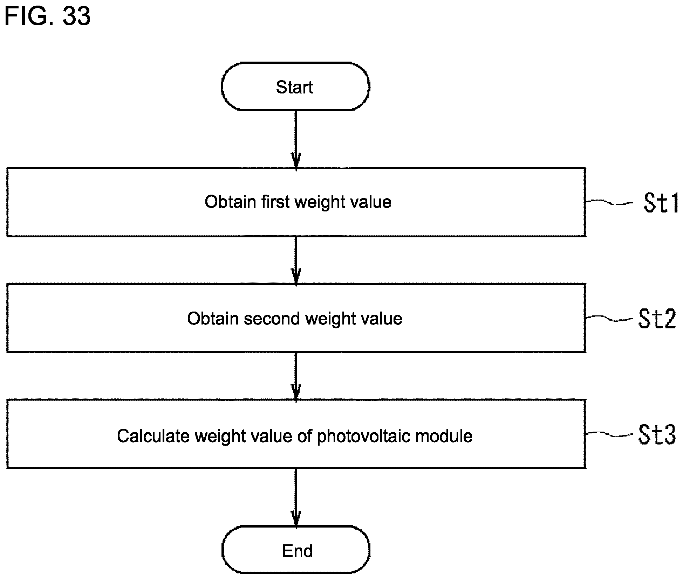

As illustrated in FIG. 33, the controller 50 may perform the processes in step St1, step St2, and step St3 in this order. In step St1, the first obtainer 503 obtains, for example, information indicating the first weight value including the weight values of the photovoltaic module 3 and the fixture 90 measured by the weight measurer 20 with the photovoltaic module 3 being held by the holder 22 under predetermined placement conditions using the fixture 90. In step St2, the first obtainer 503 obtains, for example, information indicating the second weight value being the weight value of the fixture 90 being held by the holder 22 measured by the weight measurer 20. In step St3, the weight calculator 504 calculates, for example, the weight value of the photovoltaic module 3 by subtracting the second weight value obtained in step St2 from the first weight value obtained in step St1.

In the example described below, multiple photovoltaic modules 3 may sequentially undergo the output measurement and the weight measurement using the same fixture 90. In this case, before, after, or during the output measurement and the weight measurement performed sequentially on the photovoltaic modules 3, the weight measurer 20 may measure, for example, the second weight value being the weight value of the fixture 90 held by the holder 22 at least once.

In the eighth embodiment, as illustrated in, for example, FIG. 25, the first wiring W1 may be electrically connected to, with wiring (also referred to as third wiring) W3 included in the fixture 90, the first terminal 3p and the second terminal 3n of the photovoltaic module 3 held by the holder 22 under predetermined placement conditions using the fixture 90. In this case, the connecting process in step S10b in FIG. 11 includes, for example, electrically connecting the first wiring W1 to the first terminal 3p and the second terminal 3n with the third wiring W3 included in the fixture 90. The weight of the first wiring W1 thus affects, for example, the second weight value being the weight value of the fixture 90. The weight value of the photovoltaic module 3 is thus calculated accurately although the fixture 90 is used to hold the photovoltaic module 3. The above structure also allows the output characteristics and the weight of the photovoltaic module 3 to be measured accurately under the same or similar placement conditions.

The third wiring W3 includes, for example, a first wire (also referred to as a 3A-wire) and a second wire (also referred to as a 3B-wire). The first 3A-wire is, for example, electrically connected to the first 1A-wire in the first wiring W1. The second 3B-wire is, for example, connected to the second 1B-wire in the first wiring W1. Each of the 3A-wire and the 3B-wire includes, for example, a conductive wire with its outer periphery covered with an insulator such as resin. The first wiring W1 may be connected to the third wiring W3 in, for example, any of the manners including connector connection, pin-terminal connection, button connection, and slide-in connection. The third wiring W3 may include, for example, a portion extending through the fixture 90 or a portion extending on the surface of the fixture 90. The fixture 90 may be, for example, adjacent to or in contact with the first terminal 3p and the second terminal 3n when the holder 22 holds the photovoltaic module 3 under predetermined placement conditions using the fixture 90. In this case, the third wiring W3 may be, for example, directly connected to the first terminal 3p and the second terminal 3n. The third wiring W3 may be connected to the first terminal 3p and the second terminal 3n in, for example, any of the manners including connector connection, pin-terminal connection, button connection, and slide-in connection. The fixture 90 may be, for example, away from the first terminal 3p and the second terminal 3n when the holder 22 holds the photovoltaic module 3 using the fixture 90. In this case, the third wiring W3 may be electrically connected to the first terminal 3p and the second terminal 3n with another wiring member. The other wiring member may be included in, for example, the third wiring W3 in the fixture 90.

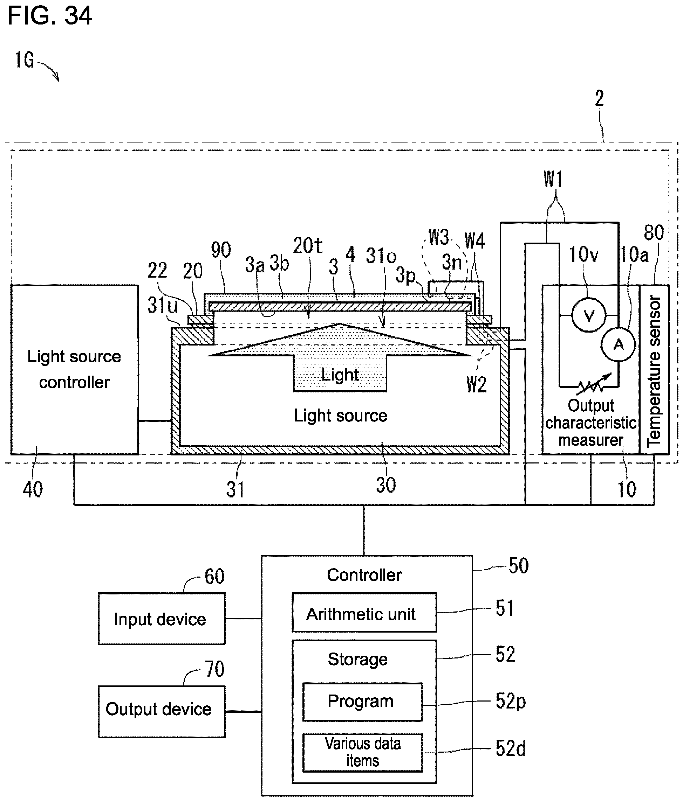

As illustrated in, for example, FIG. 34, the weight measurer 20 may include wiring (second wiring) W2 that can electrically connect the first wiring W1 and the third wiring W3. In this case, the connecting process in step S10b in FIG. 11 includes, for example, electrically connecting the first wiring W1 to the first terminal 3p and the second terminal 3n with the second wiring W2 included in the weight measurer 20 and the third wiring W3 included in the fixture 90. This reduces, for example, a force caused by the first wiring W1 acting on the photovoltaic module 3. This allows, for example, measuring the weight values of the photovoltaic module 3 and the fixture 90 accurately. This also allows, for example, the output characteristics and the weight of the photovoltaic module 3 to be measured accurately under the same or similar placement conditions.

One variation (also referred to a 1B-example structure) of the measurement device 1G according to the eighth embodiment illustrated in FIG. 34 is based on, for example, the variation of the measurement device 1 according to the first embodiment illustrated in FIG. 9, with the holder 22 being varied to hold the photovoltaic module 3 using the fixture 90 under predetermined placement conditions.

In the example of FIG. 34, the second wiring W2 and the third wiring W3 are electrically connected with wiring (fourth wiring) W4. The fourth wiring W4 includes, for example, a first wire (also referred to as a 4A-wire) and a second wire (also referred to as a 4B-wire). The second wiring W2 includes, for example, a first wire (also referred to as a 2A-wire) and a second wire (also referred to as a 2B-wire). The first 2A-wire is, for example, electrically connected to the first 1A-wire in the first wiring W1 and electrically connected to the first 3A-wire in the third wiring W3 with the first 4A-wire in the fourth wiring W4. The second 2B-wire is, for example, electrically connected to the second 1B-wire in the first wiring W1 and electrically connected to the second 3B-wire in the third wiring W3 with the second 4B-wire in the fourth wiring W4. The first wiring W1 may be connected to the second wiring W2, the second wiring W2 to the fourth wiring W4, and the fourth wiring W4 to the third wiring W3 in, for example, any of the manners including connector connection, pin-terminal connection, button connection, and slide-in connection. The second wiring W2 may include, for example, a portion extending through the weight measurer 20 or a portion extending on the surface of the weight measurer 20. The measurement device 1 can perform the output measurement and the weight measurement with, for example, the first wiring W1 being electrically connected to the first terminal 3p and the second terminal 3n of the photovoltaic module 3 with the second wiring W2, the fourth wiring W4, and the third wiring W3 connected between the first wiring W1 and the first and second terminals 3p and 3n in this order.

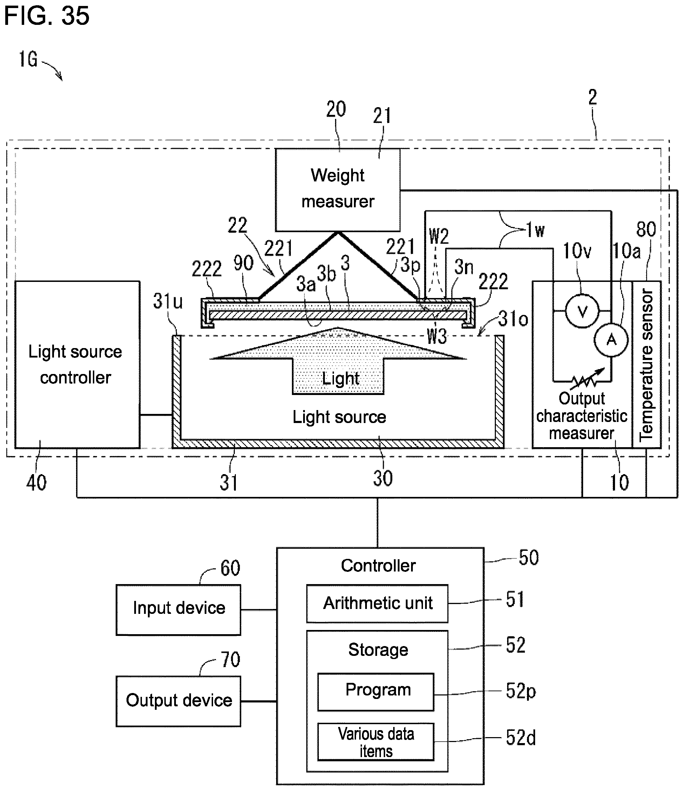

A measurement device 1G with a second structure according to the eighth embodiment illustrated in FIG. 35 is based on, for example, the structure of the measurement device 1 A according to the second embodiment illustrated in FIG. 16, with the holding sections 222 being varied to hold the photovoltaic module 3 under predetermined placement conditions using the fixture 90.

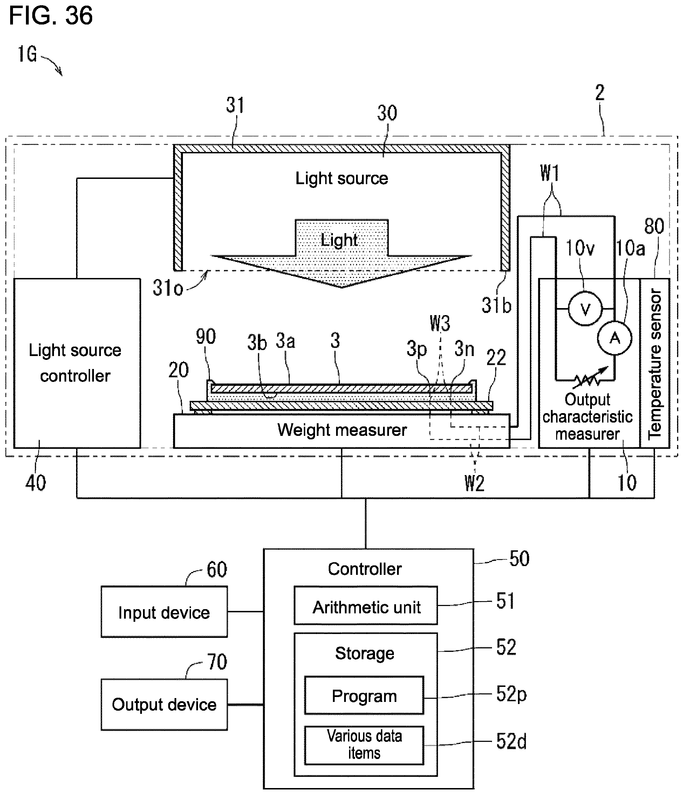

A measurement device 1G with a third structure according to the eighth embodiment illustrated in FIG. 36 is based on, for example, the structure of the measurement device 1B according to the third embodiment illustrated in FIG. 17, with the holder 22 being varied to hold the photovoltaic module 3 under predetermined placement conditions using the fixture 90.

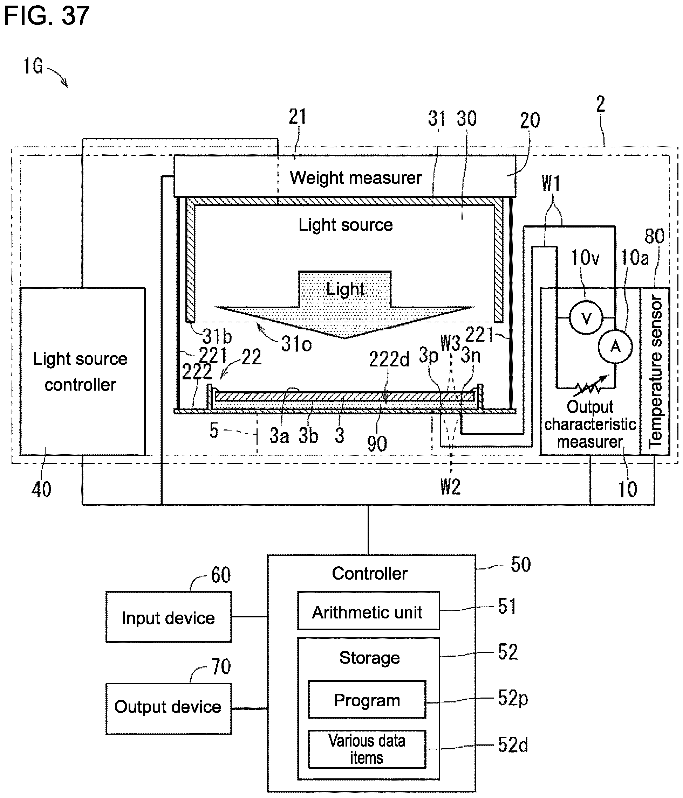

A measurement device 1G with a fourth structure according to the eighth embodiment illustrated in FIG. 37 is based on, for example, the structure of the measurement device 1C according to the fourth embodiment illustrated in FIG. 18, with the holding section 222 being varied to hold the photovoltaic module 3 under predetermined placement conditions using the fixture 90.

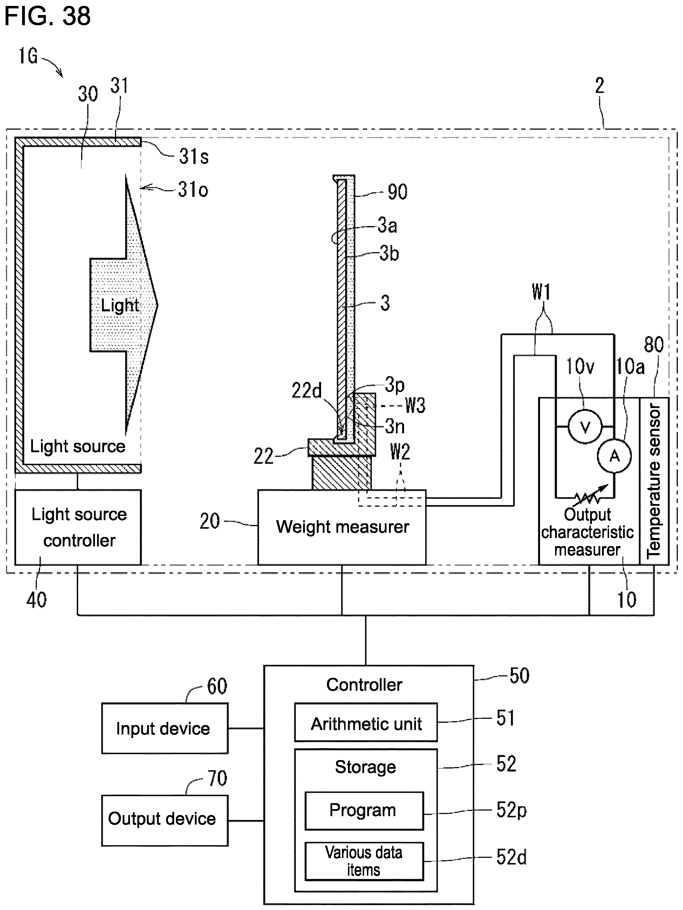

A measurement device 1G with a fifth structure according to the eighth embodiment illustrated in FIG. 38 is based on, for example, the second structure of the measurement device 1D according to the fifth embodiment illustrated in FIG. 20, with the holder 22 being varied to hold the photovoltaic module 3 under predetermined placement conditions using the fixture 90.

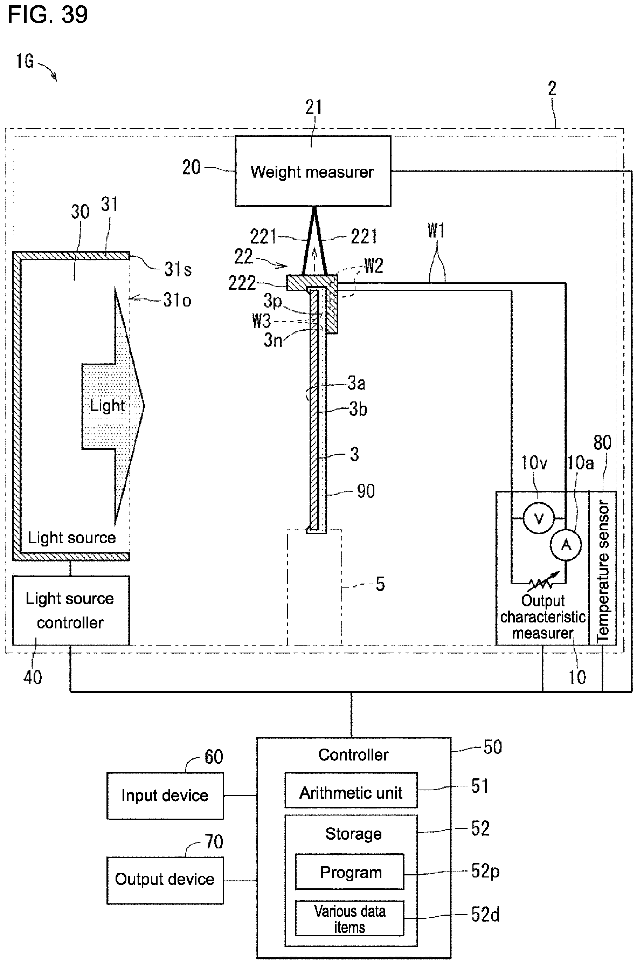

A measurement device 1G with a sixth structure according to the eighth embodiment illustrated in FIG. 39 is based on, for example, the second structure of the measurement device 1E according to the sixth embodiment illustrated in FIG. 22, with the holding section 222 being varied to hold the photovoltaic module 3 under predetermined placement conditions using the fixture 90.

In each of the examples of FIGs. 35 to 39, the first wiring W1 may also be electrically connected to, with wiring (third wiring) W3 included in the fixture 90, the first terminal 3p and the second terminal 3n of the photovoltaic module 3 held by the holder 22 under predetermined placement conditions using the fixture 90. The weight of the first wiring W1 thus affects, for example, the second weight value being the weight value of the fixture 90. The weight value of the photovoltaic module 3 is thus calculated accurately although the fixture 90 is used to hold the photovoltaic module 3. The above structure also allows the output characteristics and the weight of the photovoltaic module 3 to be measured accurately under the same or similar placement conditions. The weight measurer 20 may include wiring (second wiring) W2 that can electrically connect the first wiring W1 and the third wiring W3. This reduces, for example, a force caused by the first wiring W1 acting on the photovoltaic module 3. The weight values of the photovoltaic module 3 and the fixture 90 can thus be, for example, measured accurately. This also allows, for example, the output characteristics and the weight of the photovoltaic module 3 to be measured accurately under the same or similar placement conditions.

In each example, the holder 22 is, for example, adjacent to or in contact with the fixture 90 when holding the photovoltaic module 3 under predetermined placement conditions using the fixture 90. The second wiring W2 may thus be, for example, directly connected to the third wiring W3. The second wiring W2 may be connected to the third wiring W3 in, for example, any of the manners including connector connection, pin-terminal connection, button connection, and slide-in connection.

The fixture 90 may eliminate, for example, the third wiring W3, and the second wiring W2 may be electrically connected to the first terminal 3p and the second terminal 3n through, for example, a space in the fixture 90. In other words, the weight measurer 20 may include wiring (second wiring) W2 that can electrically connect the first wiring W1 to the first terminal 3p and the second terminal 3n of the photovoltaic module 3 held by the holder 22 under predetermined placement conditions using the fixture 90. The weight measurement performed by the weight measurer 20 may thus be, for example, less likely to be affected by the weight of the first wiring W1, thus improving the accuracy of calculating the weight value of the photovoltaic module 3. The above structure also allows the output characteristics and the weight of the photovoltaic module 3 to be measured accurately under the same or similar placement conditions.

The first 2A-wire in the second wiring W2 is, for example, electrically connected to the first 1A-wire in the first wiring W1 and to the first terminal 3p. The second 2B-wire in the second wiring W2 is, for example, connected to the second 1B-wire in the first wiring W1 and electrically connected to the second terminal 3n. The second wiring W2 may be connected to the first terminal 3p and the second terminal 3n in, for example, any of the manners including connector connection, pin-terminal connection, button connection, and slide-in connection. The second wiring W2 may include, for example, a portion extending through the weight measurer 20 or a portion extending on the surface of the weight measurer 20.

### 3. Others

In each of the above embodiments, the measurement device 1, 1A, 1B, 1C, 1D, 1E, 1F, or 1G may have, for example, the photovoltaic module 3 at slightly different positions between when performing the output measurement and when performing the weight measurement. For example, in the examples of FIGs. 18, 21, 22, 37, and 39, the output measurement may be performed while the photovoltaic module 3 is on a mount table 5, and the weight measurement may be performed after the photovoltaic module 3 is hung above the mount table 5 by the weight measurer 20. In this case, in the first measurement process in step S20 in FIG. 10, the photovoltaic module 3 may be, for example, at different positions between when the output characteristic measurer 10 measures the output voltage value and the output current value between the first terminal 3p and the second terminal 3n of the photovoltaic module 3 and when the weight measurer 20 measures the weight value of the photovoltaic module 3. In other words, in the first measurement process in step S20 in FIG. 10, the position of the photovoltaic module 3 may be, for example, different between when the output measurement is performed and when the weight measurement is performed.

In each of the above second, fourth and sixth embodiments and in each of the above second, fourth and sixth examples of the eighth embodiment, the holder 22 in the weight measurer 20 may shift vertically in accordance with the weight of the photovoltaic module 3. The first surface 3a may thus deviate, for example, from the intended positional relationship with the light source 30. In such a case, the weight measurer 20 may include, for example, a device (also referred to as a moving device) to move the holder 22 vertically in accordance with the weight of the photovoltaic module 3 to reduce the vertical shift of the holder 22. The moving mechanism may be, for example, a device that can wind up and down the connectors 221 vertically. The controller 50 may move, for example, the holder 22 vertically with the moving device in the weight measurer 20 in accordance with, for example, the weight value of the photovoltaic module 3 measured by the weight measurer 20.

In each of the above embodiments, the measurement device 1, 1A, 1B, 1C, 1D, 1E, 1F, or 1G may eliminate, for example, the controller 50, the input device 60, and the output device 70. In other words, the controller 50, the input device 60, and the output device 70 may be included in another device or other devices connected to the measurement device 1, 1A, 1B, 1C, 1D, 1E, 1F, or 1G to transmit and receive data to the measurement device. In other words, the measurement device 1, 1A, 1B, 1C, 1D, 1E, 1F, or 1G includes, for example, the output characteristic measurer 10, the weight measurer 20, and the light source 30, and may or may not include one or more of the controller 50, the input device 60, or the output device 70. The controller 50 may be, for example, any computer such as a personal computer. The input device 60 may be, for example, any input device connected to a computer, such as a keyboard or a mouse. The output device 70 may be, for example, any display connected to a computer, such as a liquid crystal display.

In each of the above embodiments, the measurement device 1, 1A, 1B, 1C, 1D, 1E, 1F, or 1G may eliminate, for example, the light source 30, the light source controller 40, the controller 50, the input device 60, and the output device 70. In other words, the light source 30, the light source controller 40, the controller 50, the input device 60, and the output device 70 may be included in another device or other devices that can transmit and receive data with the measurement device 1, 1A, 1B, 1C, 1D, 1E, 1F, or 1G. In other words, the measurement device 1, 1A, 1B, 1C, 1D, 1E, 1F, or 1G includes, for example, the output characteristic measurer 10 and the weight measurer 20, and may or may not include one or more of the light source 30, the light source controller 40, the controller 50, the input device 60, or the output device 70. With any of the above structures, the measurement device 1, 1A, 1B, 1C, 1D, 1E, 1F, or 1G can measure, for example, the output characteristics and the weight of the photovoltaic module 3 under similar conditions. This can improve, for example, the measurement accuracy of the index value for the output characteristics of the photovoltaic module 3 such as the maximum output value per unit weight of the photovoltaic module 3.

In each of the above embodiments, all or at least one of the functions of the controller 50 may be, for example, implemented by hardware that can implement the functions without software. In other words, the controller 50 may include, for example, a circuit.

In each of the above embodiments, the output power value may be, for example, the maximum output value or the product of the output voltage value and the output current value.

The components described in the above embodiments and variations may be entirely or partially combined as appropriate unless any contradiction arises.

### REFERENCE SIGNS

1, 1A, 1B, 1C, 1D, 1E, 1F, 1Gmeasurement device
3 photovoltaic module
3a first surface (light-receiving surface)
3n second terminal
3p first terminal
10 output characteristic measurer
20 weight measurer
22 holder
22d, 222d recess
30 light source
50 controller
51 arithmetic unit
52 storage
52d various data items
60 input device
70 output device
90 fixture
504 weight calculator (first calculator)
506 output calculator (second calculator)
507 index calculator (third calculator)
521d second weight value information
522d fixture weight information
W1 first wiring
W2 second wiring
W3 third wiring

## Claims

1. A measurement method for a photovoltaic module, the measurement method comprising:
loading a photovoltaic module onto a measurement device; and
measuring, with an output characteristic measurer included in the measurement device, an output voltage value and an output current value between a positive terminal and a negative terminal of the photovoltaic module, and measuring, with a weight measurer included in the measurement device, a weight value of the photovoltaic module.

2. The measurement method according to claim 1, wherein
the loading includes
holding, with a holder included in the weight measurer, the photovoltaic module under a predetermined placement condition, and
electrically connecting first wiring included in the output characteristic measurer to the positive terminal and the negative terminal, and
the measuring includes measuring, with the output characteristic measurer, the output voltage value and the output current value while a light source is illuminating a light-receiving surface of the photovoltaic module held by the holder under the predetermined placement condition, and measuring, with the weight measurer, the weight value of the photovoltaic module held by the holder under the predetermined placement condition.

3. The measurement method according to claim 2, wherein
the holding includes supporting, with the holder, the photovoltaic module from below.

4. The measurement method according to claim 2, wherein
the holding includes hanging, with the holder, the photovoltaic module from above.

5. The measurement method according to claim 3, wherein
the holding includes supporting, with the holder, the photovoltaic module from below with the light-receiving surface facing vertically downward.

6. The measurement method according to claim 4, wherein
the holding includes hanging, with the holder, the photovoltaic module from above with the light-receiving surface facing vertically downward.

7. The measurement method according to claim 3, wherein
the holding includes supporting, with the holder, the photovoltaic module from below with the light-receiving surface facing vertically upward.

8. The measurement method according to claim 4, wherein
the holding includes hanging, with the holder, the photovoltaic module from above with the light-receiving surface facing vertically upward.

9. The measurement method according to claim 3, wherein
the holding includes supporting, with the holder, the photovoltaic module from below with the light-receiving surface facing in a horizontal direction.

10. The measurement method according to claim 4, wherein
the holding includes hanging, with the holder, the photovoltaic module from above with the light-receiving surface facing in a horizontal direction.

11. The measurement method according to any one of claims 2 to 10, wherein
the holding includes holding, with the holder, the photovoltaic module to maintain an orientation of the photovoltaic module under the predetermined placement condition.

12. The measurement method according to any one of claims 2 to 11, wherein
the electrically connecting includes electrically connecting the first wiring to the positive terminal and the negative terminal with second wiring included in the weight measurer.

13. The measurement method according to any one of claims 2 to 10, wherein
the holding includes holding, with the holder, the photovoltaic module under the predetermined placement condition using a fixture,
the measuring includes measuring, with the weight measurer, a first weight value including weight values of the fixture and the photovoltaic module held by the holder under the predetermined placement condition using the fixture, and
the measurement method further comprises calculating, with a first calculator, the weight value of the photovoltaic module by subtracting, from the measured first weight value, a second weight value being a weight value of the fixture.

14. The measurement method according to claim 13, further comprising:
storing, into a storage, information indicating the second weight value being the weight value of the fixture,
wherein the calculating includes calculating, with the first calculator, the weight value of the photovoltaic module by subtracting, from the measured first weight value, the second weight value obtained from the storage.

15. The measurement method according to claim 14, wherein
the storing includes storing, into the storage, fixture weight information indicating a plurality of pieces of specific information specifying types of fixtures being associated with a plurality of pieces of information indicating weight values,
the measurement method further comprises receiving, with an input device, an input of a piece of specific information specifying a type of the fixture, and
the calculating includes obtaining, with an obtainer, information indicating the second weight value being the weight value of the fixture based on the piece of specific information received by the input device and the fixture weight information stored in the storage.

16. The measurement method according to claim 13, further comprising:
holding the fixture with the holder and measuring, with the weight measurer, the second weight value being the weight value of the fixture held by the holder before the loading of the photovoltaic module or after the measuring of the output voltage value, the output current value, and the weight value of the photovoltaic module,
wherein the calculating includes calculating, with the first calculator, the weight value of the photovoltaic module by subtracting the measured second weight value from the measured first weight value.

17. The measurement method according to any one of claims 13 to 16, wherein
the electrically connecting includes electrically connecting the first wiring to the positive terminal and the negative terminal with third wiring included in the fixture.

18. The measurement method according to claim 17, wherein
the electrically connecting includes electrically connecting the first wiring to the positive terminal and the negative terminal with second wiring included in the weight measurer and with the third wiring included in the fixture.

19. The measurement method according to any one of claims 2 to 18, wherein
the measuring of the output voltage value, the output current value, and the weight value of the photovoltaic module includes controlling, with a controller, the light source, the output characteristic measurer, and the weight measurer to cause a first measurement period and a second measurement period to at least partially overlap each other, the first measurement period is a period in which the output characteristic measurer measures the output voltage value and the output current value of the photovoltaic module, and the second measurement period is a period in which the weight measurer measures the weight value of the photovoltaic module.

20. The measurement method according to claim 19, wherein
the measuring of the output voltage value, the output current value, and the weight value of the photovoltaic module includes controlling, with the controller, the light source, the output characteristic measurer, and the weight measurer to cause the second measurement period to be included in the first measurement period or the first measurement period to be included in the second measurement period.

21. The measurement method according to any one of claims 1 to 20, further comprising:
outputting, with an output device, information indicating the weight value of the photovoltaic module measured by the weight measurer.

22. The measurement method according to claim 21, further comprising:
calculating, with a second calculator, an output power value of the photovoltaic module based on the output voltage value and the output current value measured by the output characteristic measurer,
wherein the outputting includes outputting, with the output device, information indicating the weight value of the photovoltaic module measured by the weight measurer and information indicating the output power value calculated by the second calculator.

23. The measurement method according to any one of claims 1 to 20, further comprising:
calculating, with a second calculator, an output power value of the photovoltaic module based on the output voltage value and the output current value measured by the output characteristic measurer;
calculating, with a third calculator, an index value through a predetermined arithmetic operation, the predetermined arithmetic operation including dividing the output power value calculated by the second calculator by the weight value of the photovoltaic module measured by the weight measurer; and
outputting, with an output device, information indicating the calculated index value.
